(19) Europäisches Patentamt
European Patent Office
Office européen des brevets

(11) EP 4 468 209 A1

(12) **EUROPEAN PATENT APPLICATION**

(43) Date of publication:
**27.11.2024 Bulletin 2024/48**

(21) Application number: **24172608.2**

(22) Date of filing: **26.04.2024**

(51) International Patent Classification (IPC):
***G06N 5/01*** *(2023.01)*

(52) Cooperative Patent Classification (CPC):
**G06N 5/01;** G06N 7/01

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.05.2023 JP 2023084203**

(71) Applicant: **Fujitsu Limited**
**Kawasaki-shi, Kanagawa 211-8588 (JP)**

(72) Inventors:
- **KONOSHIMA, Makiko**
  **Kawasaki-shi, Kanagawa, 211-8588 (JP)**
- **TAMURA, Hirotaka**
  **Yokohama-shi, Kanagawa, 223-0066 (JP)**

(74) Representative: **Hoffmann Eitle**
**Patent- und Rechtsanwälte PartmbB**
**Arabellastraße 30**
**81925 München (DE)**

(54) **DATA PROCESSING PROGRAM, DATA PROCESSING APPARATUS, AND DATA PROCESSING METHOD**

(57) An apparatus performs processing including: specifying, for each constraint term in an evaluation function of a combinatorial optimization problem, a first auxiliary variable representing an input amount subjected to a constraint of each constraint term; generating a second auxiliary variable obtained by quantizing the first auxiliary variable; for a first constraint term, with which the second auxiliary variable changes in association with a change in a first state variable of the evaluation function, calculating a difference of a contribution amount of the first constraint term, to a first change amount in the evaluation function associated with the change in the first state variable; and based on the difference, calculating the first change amount or updating a local field to be used to specify a second change amount in the evaluation function associated with the change in each state variable.

FIG. 1

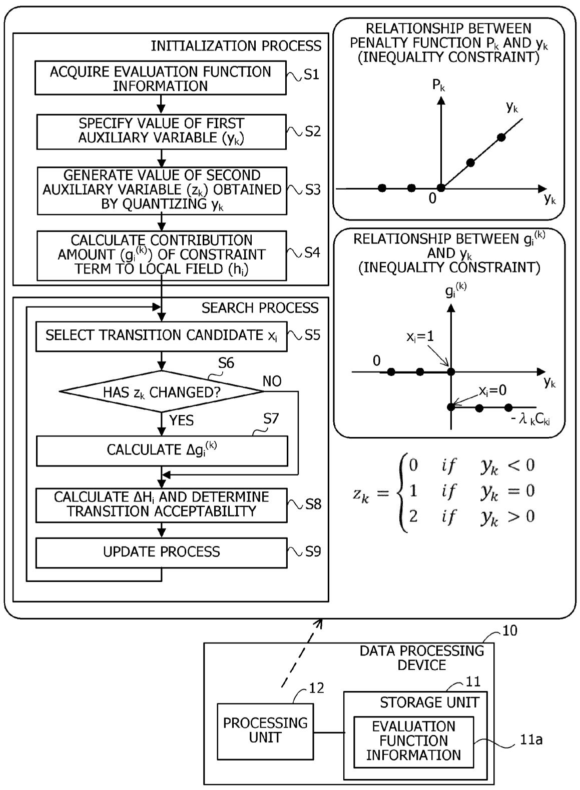


EP 4 468 209 A1

## Description

FIELD

The embodiments discussed herein are related to a data processing program, a data processing apparatus, and a data processing method.

BACKGROUND

Some combinatorial optimization problems have a constraint condition supposed to be satisfied by a solution, and an approach for performing a search in consideration of the constraint condition has been proposed. Examples of the constraint condition include an inequality constraint, an equality constraint, an absolute value constraint, and the like. An evaluation function reflecting a constraint condition can be represented by following Formula (1).
[Mathematical Formula 1]

$$H(\boldsymbol{x}) = E(\boldsymbol{x}) + P_{tot}(\boldsymbol{x}) \qquad (1)$$

The first term on the right side of Formula (1) is a cost term, and the second term on the right side is a total value of a plurality of constraint terms. The total value of the plurality of constraint terms can be represented by following Formula (2).
[Mathematical Formula 2]

$$P_{tot}(\boldsymbol{x}) = \sum_{k=1}^{m} \lambda_k P_k(\boldsymbol{x}) \qquad (2)$$

In Formula (2), $P_k(x)$ denotes a penalty function of a constraint term relating to a constraint having k as the identification number. $P_k(x)$ is represented by a nonlinear function. The summed number of constraint terms is represented by m. In addition, $\lambda_k$ denotes a predetermined coefficient (hereinafter referred to as a constraint coefficient) for the constraint having k as the identification number. Hereinafter, $A_kP_k(x)$ will be referred to as a constraint term.

In a case where the constraint condition is an inequality constraint, $P_k(x)$ in Formula (2) can be represented by following Formula (3).
[Mathematical Formula 3]

$$P_k(\boldsymbol{x}) = max\left(0, P_{in}^{(k)}(\boldsymbol{x})\right) \qquad (3)$$

In a case where the constraint condition is an equality constraint, $P_k(x)$ in Formula (2) can be represented by following Formula (4).
[Mathematical Formula 4]

$$P_k(\boldsymbol{x}) = \left|P_{in}^{(k)}(\boldsymbol{x})\right| \qquad (4)$$

In $P_k(x)$ as indicated in Formulas (3) and (4), $P_{in}^{(k)}(x)$ denotes an input amount (also referred to as a resource amount or a used resource amount) subjected to the constraint having k as the identification number. The input amount is represented by following Formula (5).
[Mathematical Formula 5]

$$P_{in}^{(k)}(\boldsymbol{x}) = \sum_{i=1}^{n} C_{ki} x_i + b^{(k)} \qquad (5)$$

A coefficient (weight value) indicating a weight for $x_i$ in the constraint having k as the identification number is denoted by $C_{ki}$. A coefficient representing an upper limit or the like of the input amount in the constraint having k as the identification number is denoted by $b^{(k)}$.

Meanwhile, the cost term is represented by, for example, a function of a quadratic form as in following Formula (6).
[Mathematical Formula 6]

$$E(\boldsymbol{x}) = -\frac{1}{2}\sum_{i=1}^{n}\sum_{j=1}^{n} W_{ij}x_i x_j - \sum_{i=1}^{n} b_i x_i \qquad (6)$$

The first term on the right side is for integrating products of values (0 or 1) of two state variables and a weight value (representing strength of correlation between the two state variables) for all combinations of n state variables with neither omission nor duplication. A state variable having i as the identification number is denoted by $x_i$, a state variable having j as the identification number is denoted by $x_j$, and a weight value indicating magnitude of correlation between the state variables having i and j as the identification numbers is denoted by $W_{ij}$. The second term on the right side is for summing up products of a bias coefficient and a state variable for each identification number. A bias coefficient for i as the identification number is indicated by $b_i$.

In addition, a change amount ($\Delta E_i$) of the cost term associated with the change in the value of $x_i$ is represented by following Formula (7).
[Mathematical Formula 7]

$$\Delta E_i = -\Delta x_i \left( \sum_{j} W_{ij}x_j + b_i \right) = -\Delta x_i h_i \qquad (7)$$

In Formula (7), when $x_i$ changes to 0 from 1, $\Delta x_i$ has -1, and when $x_i$ changes to 1 from 0, $\Delta x_i$ has 1. Note that $h_i$ is called a local field, and $\Delta E_i$ is obtained by multiplying $h_i$ by a sign (+1 or -1) according to $\Delta x_i$. For this reason, $h_i$ can also be said to be a variable used to specify the change amount of the value of the evaluation function. By holding and appropriately updating such $h_i$, $\Delta E_i$ may be calculated without performing a product-sum operation.

In a search for a solution to a combinatorial optimization problem, a Markov-Chain Monte Carlo (MCMC) method is used. As a kind of the MCMC method, there is a simulated annealing method and a replica exchange method. In such a search by the MCMC method, when the change amount ($\Delta H_i$) of the value of the evaluation function associated with the change in the value of $x_i$ is smaller than a threshold value (sometimes called a noise value) obtained based on a random number and the value of a temperature parameter, a process of inverting the value of $x_i$ is repeated. In this manner, a search for a state (a combination of the values of the state variables) in which the value of the evaluation function locally becomes the minimum is performed. The state in which the minimum value of local minimum values of the evaluation function is reached is regarded as an optimal solution.

When the evaluation function including a constraint term is used, $\Delta H_i$ denotes the total value of $\Delta E_i$ and the change amount of $P_{tot}(x)$ associated with the change in the value of $x_i$.

Examples of the related art include: Japanese Laid-open Patent Publication No. 2020-204928, U.S. Patent Application Publication No. 2008/0065573, and International Publication Pamphlet No. WO 2020/196862.

## SUMMARY

### TECHNICAL PROBLEM

The constraint term is represented using, for example, a nonlinear penalty function as indicated in Formula (3) or Formula (4). Therefore, it is difficult to calculate the change amount of the constraint term, using the local field ($h_i$) as in the cost term. For this reason, every time the change amount of the constraint term associated with the change in the value of $x_i$ is computed, the input amount as indicated by, for example, Formula (5) will have to be computed with respect to each constraint term, also using the values of the state variables other than $x_i$. Consequently, the amount of computation is expanded in some cases.

In one aspect, an object of the embodiments is to reduce the amount of computation of a combinatorial optimization problem having a constraint condition.

SOLUTION TO PROBLEM

According to an aspect of the embodiments, there is provided a program including instructions which, when executed by a computer, cause the computer to execute processing including: acquiring, from a storage unit, evaluation function information on an evaluation function of a combinatorial optimization problem that includes a cost term and a plurality of constraint terms; specifying, for each of the plurality of constraint terms, values of a first auxiliary variable that represents an input amount subjected to a constraint that relates to each of the plurality of constraint terms, based on the evaluation function information; generating values of a second auxiliary variable obtained by quantizing the first auxiliary variable, based on the values of the first auxiliary variable; for a first constraint term, among the plurality of constraint terms, with which the values of the second auxiliary variable change in association with a change in values of a first state variable among a plurality of state variables of the evaluation function, calculating a first difference value of a contribution amount of the first constraint term associated with the change in the values of the first state variable, to a first change amount in values of the evaluation function associated with the change in the values of the first state variable; and calculating the first change amount by using the first difference value, or updating a local field to be used to specify a second change amount in the values of the evaluation function associated with the change in each of the plurality of state variables, by using the first difference value.

ADVANTAGEOUS EFFECTS OF INVENTION

In one aspect, the embodiments may reduce the amount of computation of a combinatorial optimization problem having a constraint condition.

BRIEF DESCRIPTION OF DRAWINGS

FIG. 1 is a diagram illustrating an exemplary data processing device according to a first embodiment;
FIGs. 2A and 2B are diagrams illustrating an example of a relationship between $P_k$ and $y_k$ and a relationship between $g_i^{(k)}$ and $y_k$ in a case where a constraint condition is an equality constraint;
FIG. 3 is a diagram illustrating a hardware example of the data processing device;
FIG. 4 is a block diagram illustrating exemplary functions of the data processing device;
FIG. 5 is a flowchart illustrating an example of a processing procedure of a data processing device according to a second embodiment;
FIG. 6 is a diagram illustrating a search unit of a comparative example;
FIG. 7 is a flowchart illustrating a processing procedure of a data processing device including the search unit of the comparative example;
FIG. 8 is a diagram illustrating a hardware example of the search unit;
FIG. 9 is a diagram illustrating an example of an h-update circuit and a $y_k$ update circuit;
FIG. 10 is a diagram illustrating an example of a g-calculation circuit that is an example of a g/$\Delta$g calculation circuit;
FIG. 11 is a diagram illustrating an example of a $\Delta$g calculation circuit that is an example of the g/$\Delta$g calculation circuit;
FIG. 12 is a timing chart illustrating an example of operation timings of the data processing device;
FIGs. 13A and 13B are diagrams illustrating an example of a relationship between $P_k$ and $y_k$ and a relationship between $g_i^{(k)}$ and $y_k$ in a case where the constraint condition is an inequality constraint and $C_{ki}$ has a ternary value;
FIGs. 14A and 14B are diagrams illustrating an example of a relationship between $P_k$ and $y_k$ and a relationship between $g_i^{(k)}$ and $y_k$ in a case where the constraint condition is an equality constraint and $C_{ki}$ has a ternary value; and
FIG. 15 is a diagram illustrating a $\Delta$g calculation circuit according to a modification.

DESCRIPTION OF EMBODIMENTS

Hereinafter, modes for carrying out the embodiments will be described with reference to the drawings.
A data processing device according to each embodiment illustrated below is designed to search for a solution to a combinatorial optimization problem having a constraint condition. As an example of the combinatorial optimization problem having a constraint condition, there is a knapsack problem.

(First Embodiment)

FIG. 1 is a diagram illustrating an exemplary data processing device according to a first embodiment.
A data processing device 10 according to the first embodiment includes a storage unit 11 and a processing unit 12.

The storage unit 11 may include a volatile semiconductor memory such as a random access memory (RAM) or may include a nonvolatile storage such as a hard disk drive (HDD) or a flash memory. In addition, the storage unit 11 may include both of a volatile semiconductor memory and a nonvolatile storage.

The storage unit 11 stores evaluation function information 11a on an evaluation function of a combinatorial optimization problem including a cost term and a plurality of constraint terms. The evaluation function information 11a includes information on E(x) and $P_{tot}(x)$ as indicated in Formula (1). In a case where E(x) is represented as Formula (6), the information on E(x) includes $W_{ij}$ and bi. The information on $P_{tot}(x)$ includes, for example, $\lambda_k$ and m in Formula (2) and $C_{ki}$ and $b^{(k)}$ in Formula (5).

Note that the storage unit 11 may further store a computational condition for the combinatorial optimization problem. For example, in a case where a search is performed by the replica exchange method, the computational condition includes the number of replicas, the values of a temperature parameter to be set in each replica, and the like.

The processing unit 12 can be implemented by an electronic circuit such as an application specific integrated circuit (ASIC) or a field programmable gate array (FPGA), for example. However, the processing unit 12 can also be implemented by a processor such as a central processing unit (CPU), a graphics processing unit (GPU), or a digital signal processor (DSP), for example. The processor executes, for example, a program stored in a memory such as a RAM (which may be the storage unit 11). A set of processors may be referred to as a multiprocessor or simply a "processor". In addition, the processing unit 12 may include a processor and an electronic circuit such as an ASIC or an FPGA.

FIG. 1 illustrates an exemplary procedure of a process performed by the processing unit 12.

Step S1: The processing unit 12 acquires the evaluation function information 11a from the storage unit 11.

Step S2: The processing unit 12 specifies, for each of the plurality of constraint terms, the values (initial values) of a first auxiliary variable representing the input amount subjected to a constraint relating to each of the plurality of constraint terms, based on the evaluation function information 11a. The input amount subjected to the constraint having k as the identification number is represented by above-described Formula (5). Hereinafter, the input amount is represented by the first auxiliary variable ($y_k$). That is, $y_k$ is represented by following Formula (8).

[Mathematical Formula 8]

$$y_k = P_{in}^{(k)}(\boldsymbol{x}) = \sum_{i=1}^{n} C_{ki} x_i + b_k \tag{8}$$

Note that $b_k$ in Formula (8) and $b^{(k)}$ in Formula (5) are the same. The value of $y_k$ is computed from $C_{ki}$, $b_k$, and the number (n) of state variables included in the evaluation function information 11a and the initial values of $x_1$ to $x_n$. The initial values of $x_1$ to $x_n$ may be stored in the storage unit 11, or may be input from the outside of the data processing device 10, for example, by a user working on an input device. The initial values of $x_1$ to $x_n$ may be, for example, all zero or all one. In addition, the initial values of $x_1$ to $x_n$ may be random numbers.

FIG. 1 illustrates an example of a relationship between a penalty function ($P_k$) of an inequality constraint and $y_k$. The horizontal axis represents the value of $y_k$, and the vertical axis represents the magnitude of $P_k$.

$P_k$ is represented by a function as indicated by Formula (3). Therefore, when $y_k$ representing the input amount is 0 or less, $P_k = 0$ is met, and when $y_k$ is greater than 0, $P_k = y_k$ is met.

Step S3: The processing unit 12 generates a value of a second auxiliary variable ($z_k$) obtained by quantizing $y_k$, based on the value of $y_k$. For example, a ternary value indicating whether $y_k$ is positive, negative, or zero is denoted by $z_k$. That is, $z_k$ can be represented by following Formula (9).

[Mathematical Formula 9]

$$z_k = \begin{cases} 0 & if \quad y_k < 0 \\ 1 & if \quad y_k = 0 \\ 2 & if \quad y_k > 0 \end{cases} \tag{9}$$

Note that $z_k$ is not limited to a ternary value of 0, 1, and 2 and may be a ternary value of 11, 00, and 01. The reason for using such a ternary $z_k$ will be described later.

Step S4: The processing unit 12 calculates a contribution amount of each of the plurality of constraint terms to a change amount ($\Delta H_i$) of the value of the evaluation function associated with the change in the value of $x_i$, based on

the value of $y_k$. The contribution amount can also be said to be a value representing the magnitude of contribution to the local field ($h_i$) used to specify $\Delta H_i$. $\Delta H_i$ can be represented by following Formula (10).
[Mathematical Formula 10]

$$\Delta H_i = -h_i \Delta x_i \tag{10}$$

$\Delta H_i$ is obtained by multiplying $h_i$ by a sign (+1 or -1) according to $\Delta x_i$. Following Formula (11) can represent $h_i$.
[Mathematical Formula 11]

$$h_i = \sum_{j=1}^{n} W_{ij} x_j + b_i + \sum_{k=1}^{m} g_i^{(k)} \tag{11}$$

The contribution amount of the constraint term relating to the constraint with the identification number = k to $\Delta H_i$ (or $h_i$) is denoted by $g_i^{(k)}$. In a case where the constraint condition is an inequality constraint, $g_i^{(k)}$ can be represented by following Formula (12).
[Mathematical Formula 12]

$$g_i^{(k)} = -\lambda_k \left[ max\left(0, y_k\big|_{x_i \to x_i + \Delta x_i}\right) - max(0, y_k) \right] / \Delta x_i \tag{12}$$

By multiplying the slope of the graph of $P_k$ - $y_k$ as illustrated in FIG. 1 by $-\lambda_k$, $g_i^{(k)}$ is obtained. In a case where $y_k$ has 0, in consideration of the fact that the slope of the graph of $P_k$ - $y_k$ differs depending on the direction in which $x_i$ changes, $g_i^{(k)}$ can be represented as following Formula (13).
[Mathematical Formula 13]

$$g_i^{(k)} = \begin{cases} 0 & if \quad y_k < 0 \\ -\lambda_k C_{ki}(1 - x_i) & if \quad y_k = 0 \\ -\lambda_k C_{ki} & if \quad y_k > 0 \end{cases} \tag{13}$$

A weight value indicating a weight for $x_i$ in the constraint having k as the identification number is denoted by $C_{ki}$. Hereinafter, $C_{ki}$ will be assumed to be a value representing whether or not $x_i$ affects $P_k$. In a case where $x_i$ affects $P_k$, $C_{ki}$ = 1 is met, and in a case where $x_i$ does not affect $P_k$, $C_{ki}$ = 0 is met.

FIG. 1 illustrates a diagram illustrating an example of a relationship between $g_i^{(k)}$ and $y_k$ in a case where the constraint condition is an inequality constraint. The horizontal axis represents the value of $y_k$, and the vertical axis represents the value of $g_i^{(k)}$. When $y_k$ = 0 is met, according to Formula (13), $g_i^{(k)}$ = 0 is met in a case of $x_i$ = 1, and $g_i^{(k)}$ = $-\lambda_k C_{ki}$ is met in a case of $x_i$ = 0.

The above-mentioned reason for using the ternary $z_k$ is that $g_i^{(k)}$ can be distinguished into three types of values, depending on whether $y_k$ is positive, negative, or zero as described above.

Note that, in a case where $\Delta g_i^{(k)}$ to be described later is calculated from $\Delta z_k$, the processing unit 12 does not have to compute $g_i^{(k)}$ itself.

The processes in steps S1 to S4 described above are an initialization process, and thereafter the following search process is performed. Note that the values of $y_k$ and $z_k$ and $g_i^{(k)}$ calculated in the processes in steps S2 to S4 are held in a holding unit (such as a register) (not illustrated) of the processing unit 12. The value of $h_i$ represented by Formula (11) may also be held in the holding unit. In addition, the storage unit 11 may store the values of $y_k$, $z_k$, $g_i^{(k)}$, or $h_i$.

Step S5: The processing unit 12 selects a transition candidate $x_i$ from among $x_1$ to $x_n$. The processing unit 12 may randomly select $x_i$ from $x_1$ to $x_n$, or may select one $x_i$ in accordance with a predetermined rule. In addition, in the process in step S5, the processing unit 12 may perform, for example, the following processes in steps S6 to S8 in parallel for $x_1$ to $x_n$ without selecting Xi.

Step S6: The processing unit 12 determines whether or not the value of $z_k$ relating to any one constraint term of m constraint terms changes in association with a change in the value of $x_i$ among $x_1$ to $x_n$. The value of $y_k$ in a case where the value of $x_i$ has changed is obtained by adding $C_{ki},\Delta x_i$ to the original value of $y_k$. Then, depending on whether $y_k$ in a case where the value of $x_i$ has changed is positive, negative, or zero, the value of $z_k$ in a case where the value of $x_i$ has changed is obtained by Formula (9).

The processing unit 12 performs the process in step S7 when determining that the value of $z_k$ changes and performs the process in step S8 when determining that the value of $z_k$ does not change.

Step S7: The processing unit 12 calculates a difference value ($\Delta g_i^{(k)}$) of $g_i^{(k)}$ associated with the change in the value of $x_i$. As can be seen from Formulas (9) and (13), the value of $g_i^{(k)}$ changes when the value of $z_k$ changes, and in other cases, the value does not change. The processing unit 12 may calculate a difference value between the held current $g_i^{(k)}$ and $g_i^{(k)}$ calculated based on the value of $x_i$ after the change, in accordance with Formula (13). Alternatively, the processing unit 12 may calculate $\Delta g_i^{(k)}$ according to a difference value ($\Delta z_k$) of $z_k$ in accordance with following Formula (14).

[Mathematical Formula 14]

$$\Delta g_i^{(k)} = \begin{cases} -\lambda_k C_{ki}(1-x_i)\Delta z_k & if \quad z_k : 0 \leftrightarrow 1 \\ -\lambda_k C_{ki} x_i \Delta z_k & if \quad z_k : 1 \leftrightarrow 2 \end{cases} \qquad (14)$$

Two types of values of $\Delta g_i^{(k)}$ in a case where $z_k$ has changed between 0 and 1 and a case where $z_k$ has changed between 1 and 2 are obtained. In a case where $\Delta g_i^{(k)}$ is calculated in accordance with Formula (14), the processing unit 12 does not have to compute $g_i^{(k)}$ itself in the process in step S4.

Step S8: The processing unit 12 determines whether or not to permit the change in the value of $x_i$ (transition acceptability). The transition acceptability is confirmed based on an added value ($\Delta H_i$) of the change amount ($\Delta E_i$) of the cost term associated with the change in the value of $x_i$ and the change amount ($\Delta P_k$) of $P_k$ calculated based on $\Delta g_i^{(k)}$. $\Delta E_i$ can be computed in accordance with Formula (7). $\Delta P_k$ can be calculated by multiplying $\Delta g_i^{(k)}$ by $-\Delta x_i$. Note that, in a case where $h_i$ represented by Formula (11) is held, the processing unit 12 may calculate $\Delta H_i$ by multiplying $h_i$ by $-\Delta x_i$.

Then, for example, in a case where $\Delta H_i$ is smaller than a threshold value obtained based on a random number and the value of the temperature parameter, the processing unit 12 permits the change in the value of the transition candidate state variable. For example, $\log(rand) \times T$ is used as the threshold value. A random number value is denoted by rand, and a value of the temperature parameter is denoted by T.

In a case where the processes in steps S6 to S8 are performed for $x_1$ to $x_n$ in parallel, $\Delta H_i$ (i = 1 to n) corresponding to changes in $x_1$ to $x_n$ is calculated. Then, a change in the value of any of $x_1$ to $x_n$ is permitted based on $\Delta H_i$.

Step S9: The processing unit 12 updates the value of $x_i$ when determining to permit the change in the value of $x_i$. In addition, the processing unit 12 updates the values of $y_k$ and $z_k$ according to the change in the value of $x_i$. In a case where the value of $g_i^{(k)}$ or $h_i$ is held, the processing unit 12 updates these values, using $\Delta g_i^{(k)}$. The processing unit 12 may update the value of the evaluation function.

After the process in step S9, the processing unit 12 repeats the processes from step S5.

In a case where the simulated annealing method is performed, the processing unit 12 decreases the value of the above-mentioned temperature parameter in accordance with a predetermined temperature parameter switching schedule while the processes in steps S5 to S9 are repeated. Then, the processing unit 12 outputs, for example, the values of $x_1$ to $x_n$ when a predetermined search end condition is satisfied, as a search result for a solution to the combinatorial optimization problem (for example, displays the values on a display device (not illustrated)). Note that the processing unit 12 may update, for example, the value of the evaluation function every time the transition is accepted and hold the minimum value until then and the values of $x_1$ to $x_n$ when that minimum value was obtained. In that case, the processing unit 12 may output the values of $x_1$ to $x_n$ corresponding to the minimum value stored when the search end condition is satisfied, as a search result.

In a case where the processing unit 12 performs the replica exchange method, the processing unit 12 performs the processes in steps S5 to S9 illustrated in FIG. 1 for each of a plurality of replicas set with different values of the temperature parameter from each other. Then, the processing unit 12 performs replica exchange each time the processes in steps S5 to S9 are repeated a predetermined number of times. For example, the processing unit 12 randomly selects two of the plurality of replicas. Then, the processing unit 12 exchanges the values of the temperature parameter or the values of $x_1$ to $x_n$ between the two selected replicas with a predetermined exchange probability based on a difference in the values of the evaluation function or a difference in the values of the temperature parameter between the replicas. For example, the processing unit 12 updates the value of the evaluation function every time the transition is accepted in each replica and holds the minimum value until then and the values of $x_1$ to $x_n$ when that minimum value was obtained. Then, for example, when a predetermined search end condition is satisfied, the processing unit 12 outputs, as a search result, the values of $x_1$ to $x_n$ corresponding to a smallest minimum value in all the replicas among the minimum values stored in each replica.

As described above, the processing unit 12 of the data processing device 10 according to the first embodiment acquires, from the storage unit 11, the evaluation function information 11a on the evaluation function of the combinatorial optimization problem including the cost term and the plurality of constraint terms. Then, the processing unit 12 specifies, for each of the plurality of constraint terms, the values of the first auxiliary variable ($y_k$) representing the input amount subjected to a constraint relating to each of the plurality of constraint terms, based on the evaluation function information 11a. In addition, the processing unit 12 generates a value of the second auxiliary variable ($z_k$) obtained by quantizing $y_k$, based on the value of $y_k$. Then, for the constraint term among the plurality of constraint terms, with which the value of $z_k$ changes in association with the change in the value of $x_i$ among $x_1$ to $x_n$, the processing unit 12 calculates the difference value ($\Delta g_i^{(k)}$) of the contribution amount of the constraint term associated with the change in the value of $x_i$ to the change amount of the value of the evaluation function associated with the change in the value of $x_i$. The processing unit 12 calculates $\Delta H_i$, using $\Delta g_i^{(k)}$, or updates $h_i$ (i = 1 to n), using $\Delta g_i^{(k)}$.

This ensures that, only for the constraint term with which the value of $z_k$ changes in association with the change in the value of $x_i$, the change amount of the constraint term is calculated or $\Delta g_i^{(k)}$ used to update $h_i$ is calculated. Therefore, the processing unit 12 no longer has to calculate $\Delta H_i$ in association with a change in the value of $x_i$ or perform computation using the values of all the state variables for all the constraint terms every time $h_i$ (i = 1 to n) is updated. Accordingly, the amount of computation may be reduced.

For example, a case where the number of state variables is n = 100, the summed number of constraint terms is m = 10, and each constraint term is related to one state variable (a case where other than one of 100 instances of $C_{ki}$ for each constraint term has 0) will be examined. In this case, the amount of computation may be reduced to $1/(10 \times 100)$ as compared with a case of performing computation using the values of all the state variables for all the constraint terms.

In addition, since the amount of computation may be reduced, an increase in the amount of hardware materials to perform computation may be suppressed.

In addition, since the ternary $z_k$ or $\Delta z_k$ is used to calculate $\Delta g_i^{(k)}$, accumulation of errors may be suppressed as compared with a case of computing the change amount of the constraint term using the input amount that is a real variable as indicated by Formula (5).

Such a data processing device 10 may be expected to be useful as a technique for suppressing the amount of computation and the amount of hardware materials and obtaining an accurate solution when solving various problems in modern society that can be transformed into a combinatorial optimization problem having a constraint condition.

Note that, in the above example, description has been given by assuming that the constraint condition is an inequality constraint, but the constraint condition is not limited to this. The constraint condition may be an equality constraint.

FIGs. 2A and 2B are diagrams illustrating an example of a relationship between $P_k$ and $y_k$ and a relationship between $g_i^{(k)}$ and $y_k$ in a case where the constraint condition is an equality constraint.

In FIG. 2A illustrating a relationship between $P_k$ and $y_k$, the horizontal axis represents the value of $y_k$, and the vertical axis represents the value of $P_k$. In a case where the constraint condition is an equality constraint, $P_k$ is represented by a function as indicated by Formula (4). Therefore, $P_k = |y_k|$ is met.

In a case where the constraint condition is an equality constraint, $g_i^{(k)}$ and $\Delta g_i^{(k)}$ can be represented as following Formulas (15) and (16).

[Mathematical Formula 15]

$$g_i^{(k)} = \begin{cases} \lambda_k^- C_{ki} & if \quad z_k = 0 \\ -\lambda_k^- C_{ki} x_i - \lambda_k^+ C_{ki}(1 - x_i) & if \quad z_k = 1 \\ -\lambda_k^+ C_{ki} & if \quad z_k = 2 \end{cases} \qquad (15)$$

[Mathematical Formula 16]

$$\Delta g_i^{(k)} = \begin{cases} -(\lambda_k^- + \lambda_k^+) C_{ki}(1 - x_i)\Delta z_k & if \quad z_k : 0 \leftrightarrow 1 \\ -(\lambda_k^- + \lambda_k^+) C_{ki} x_i \Delta z_k & if \quad z_k : 1 \leftrightarrow 2 \end{cases} \qquad (16)$$

A constraint coefficient in a case of $y_k = P_{in}^{(k)} < 0$, that is, in a case of $z_k = 0$ is denoted by $\lambda_k^-$. A constraint

coefficient in a case of $y_k = P_{in}^{(k)} > 0$, that is, in a case of $z_k = 2$ is denoted by $\lambda_k^+$.

In FIG. 2B illustrating a relationship between $g_i^{(k)}$ and $y_k$, the horizontal axis represents the value of $y_k$, and the vertical axis represents the value of $g_i^{(k)}$.

When $y_k = 0$ is met, according to Formula (15), $g_i^{(k)} = +\lambda_k\text{-}C_{ki}$ is met in a case of $x_i = 1$, and $g_i^{(k)} = -\lambda_k{}^+C_{ki}$ is met in a case of $x_i = 0$.

In a case where the constraint condition is an equality constraint, by using such $g_i^{(k)}$ and $\Delta g_i^{(k)}$, an effect similar to the effect in a case where the constraint condition is an inequality constraint may be obtained.

(Second Embodiment)

Next, a data processing device according to a second embodiment will be described.

FIG. 3 is a diagram illustrating a hardware example of the data processing device.

A data processing device 20 is, for example, a computer and includes a CPU 21, a RAM 22, an HDD 23, a GPU 24, an input interface 25, a medium reader 26, and a communication interface 27. The above units are coupled to a bus.

The CPU 21 is a processor including an arithmetic circuit that executes program instructions. The CPU 21 loads at least a part of a program and data stored in the HDD 23 into the RAM 22 to execute the program. Note that the CPU 21 may include, for example, a plurality of processor cores in order to execute processes for a plurality of replicas in parallel. In addition, the data processing device 20 may include a plurality of processors. Note that a set of the plurality of processors (multiprocessor) may be called a "processor".

The RAM 22 is a volatile semiconductor memory that temporarily stores a program executed by the CPU 21 and data used by the CPU 21 for arithmetic operations. Note that the data processing device 20 may include a memory of a type other than the RAM 22 or may include a plurality of memories.

The HDD 23 is a nonvolatile storage device that stores software programs such as an operating system (OS), middleware, and application software, and data. The programs include, for example, a program for causing the data processing device 20 to perform a process of searching for a solution to a combinatorial optimization problem as described above. Note that the data processing device 20 may include another type of storage device such as a flash memory or a solid state drive (SSD) or may include a plurality of nonvolatile storage devices.

The GPU 24 outputs an image (for example, an image representing a computation result for the combinatorial optimization problem, or the like) to a display 24a coupled to the data processing device 20 in accordance with an instruction from the CPU 21. As the display 24a, a cathode ray tube (CRT) display, a liquid crystal display (LCD), a plasma display panel (PDP), an organic electro-luminescence (OEL) display, or the like can be used.

The input interface 25 acquires an input signal from an input device 25a coupled to the data processing device 20 and outputs the acquired input signal to the CPU 21. As the input device 25a, a pointing device such as a mouse, a touch panel, a touch pad, or a trackball, a keyboard, a remote controller, a button switch, or the like can be used. In addition, a plurality of types of input devices may be coupled to the data processing device 20.

The medium reader 26 is a reading device that reads a program or data recorded on a recording medium 26a. As the recording medium 26a, for example, a magnetic disk, an optical disc, a magneto-optical disk (MO), a semiconductor memory, or the like can be used. Examples of the magnetic disk include a flexible disk (FD) and an HDD. Examples of the optical disc include a compact disc (CD) and a digital versatile disc (DVD).

The medium reader 26 copies, for example, a program or data read from the recording medium 26a to another recording medium such as the RAM 22 or the HDD 23. The read program is executed by, for example, the CPU 21. Note that the recording medium 26a may be a portable recording medium and is sometimes used for distribution of a program or data. In addition, the recording medium 26a and the HDD 23 will be sometimes referred to as computer-readable recording media.

The communication interface 27 is an interface that is coupled to a network 27a and communicates with another information processing device via the network 27a. The communication interface 27 may be a wired communication interface coupled by a cable to a communication device such as a switch or may be a wireless communication interface coupled by a wireless link to a base station.

Next, functions of the data processing device 20 will be described.

FIG. 4 is a block diagram illustrating exemplary functions of the data processing device.

The data processing device 20 includes an input unit 31, a storage unit 32, an initialization processing unit 33, a search unit 34, and an output unit 35. The storage unit 32 is equipped using, for example, the RAM 22 or the HDD 23. The input unit 31, the initialization processing unit 33, the search unit 34, and the output unit 35 are equipped using, for example, the CPU 21 and a program.

The storage unit 32 is a functional block as an example of the storage unit 11 illustrated in FIG. 1, and other functional blocks are functional blocks as an example of the processing unit 12 illustrated in FIG. 1.

The input unit 31 acquires evaluation function information on an evaluation function of a combinatorial optimization problem including a cost term and a plurality of constraint terms. The evaluation function information includes information on E(x) and $P_{tot}(x)$ as indicated in Formula (1). In a case where E(x) is represented as Formula (6), the information on E(x) includes $W_{ij}$ and bi. The information on $P_{tot}(x)$ includes, for example, $\lambda_k$ and m in Formula (2) and $C_{ki}$ and $b^{(k)}$ in Formula (5).

The input unit 31 further acquires a computational condition for the combinatorial optimization problem. For example, in a case where a search is performed by the replica exchange method, the computational condition includes the number of replicas, the values of the temperature parameter to be set in each replica, and the like.

In addition, the input unit 31 may acquire the initial values of $x_1$ to $x_n$ input by a user working on the input device 25a. The initial values of $x_1$ to $x_n$ may be, for example, all zero or all one. In addition, the initial values of $x_1$ to $x_n$ may be random numbers.

The storage unit 32 stores the evaluation function information and the like acquired by the input unit 31.

The initialization processing unit 33 acquires the evaluation function information and the initial values of $x_1$ to $x_n$ stored in the storage unit 32 and performs an initialization process for the search unit 34, based on these acquired evaluation function information and initial values. The initialization process includes, for example, the following processes.

The initialization processing unit 33 calculates an initial value of $y_k$ represented by above-described Formula (8) for each of the plurality of constraint terms, based on the evaluation function information and the initial values of $x_1$ to $x_n$. In addition, the initialization processing unit 33 calculates an initial value of $z_k$ represented by above-described Formula (9), based on the initial value of $y_k$. The initialization processing unit 33 may calculate the initial value of $y_k$, based on the evaluation function information, and may also calculate an initial value of $g_i^{(k)}$ in accordance with Formula (13).

The search unit 34 includes a transition candidate selection unit 34a, a $\Delta$E calculation unit 34b, a $\Delta$g calculation unit 34c, a $\Delta$H calculation unit 34d, a transition acceptability determination unit 34e, a state update unit 34f, and an H-update unit 34g.

The transition candidate selection unit 34a selects a transition candidate x; from among $x_1$ to $x_n$. The transition candidate selection unit 34a may randomly select $x_i$ from $x_1$ to $x_n$, or may select one $x_i$ in accordance with a predetermined rule. In addition, the transition candidate selection unit 34a outputs $\Delta x_i = 1 - 2x_i$ that is a difference value between the value of the selected $x_i$ and the value of $x_i$ when the value of $x_i$ is changed.

The $\Delta$E calculation unit 34b receives $\Delta x_i$ and calculates $\Delta E_i$, based on Formula (7).

The $\Delta$g calculation unit 34c receives $\Delta x_i$ and finds a value of $y_k$ in a case where the value of xi has changed. The value of $y_k$ in a case where the value of $x_i$ has changed is obtained by adding $C_{ki}\Delta x_i$ to the original value of $y_k$. Then, the $\Delta$g calculation unit 34c finds the value of $z_k$ in accordance with Formula (9) depending on whether the value of $y_k$ in a case where the value of $x_i$ has changed is positive, negative, or zero. The $\Delta$g calculation unit 34c calculates $\Delta g_i^{(k)}$ in a case where the value of $z_k$ has changed from the original value of $z_k$.

The $\Delta$g calculation unit 34c may calculate a difference value between the held current $g_i^{(k)}$ and $g_i^{(k)}$ calculated based on the value of $x_i$ after the change, in accordance with Formula (13). Alternatively, the $\Delta$g calculation unit 34c may calculate $\Delta g_i^{(k)}$ in accordance with above-described Formula (14) according to the difference value ($\Delta z_k$) of $z_k$. The $\Delta$g calculation unit 34c outputs $\Delta P_k$ calculated by multiplying $\Delta g_i^{(k)}$ by $-\Delta x_i$.

The $\Delta$H calculation unit 34d adds $\Delta E_i$ and $\Delta P_k$ to calculate the change amount ($\Delta H_i$) of the evaluation function associated with the change in the value of $x_i$.

The transition acceptability determination unit 34e determines whether or not to permit the change in the value of $x_i$. For example, in a case where $\Delta H_i$ is smaller than a threshold value obtained based on a random number and the value of the temperature parameter, the transition acceptability determination unit 34e permits the change in the value of the transition candidate state variable.

The state update unit 34f updates the value of $x_i$ when it is determined to permit the change in the value of $x_i$. Note that, in a case where the change in the value of $x_i$ is permitted, the values of $y_k$ and $z_k$ are also updated to values calculated as described above. When holding the value of $g_i^{(k)}$ or $h_i$, the processing unit 12 also updates these values according to the change in the value of $x_i$.

In a case where the change in the value of $x_i$ is permitted, the H-update unit 34g updates H by adding $\Delta H_i$ to the original value (H) of the evaluation function.

The output unit 35 outputs a search result (for example, the values of $x_i$ to $x_n$ corresponding to the minimum value of the evaluation function obtained until then) when a search end condition is satisfied. For example, the output unit 35 may output the search result to the display 24a to display the output search result on the display 24a, transmit the search result to another information processing device via the network 27a, or store the search result in an external storage device.

FIG. 5 is a flowchart illustrating an example of a processing procedure of the data processing device according to the second embodiment.

Step S10: The input unit 31 acquires the evaluation function information on an evaluation function of a combinatorial optimization problem including a cost term and a plurality of constraint terms.

Step S11: The initialization processing unit 33 performs the initialization process as described above, based on the evaluation function information and the initial values of $x_1$ to $x_n$ stored in the storage unit 32.
Step S12: The transition candidate selection unit 34a selects a transition candidate $x_i$ from among $x_1$ to $x_n$.
Step S13: The ΔE calculation unit 34b calculates $\Delta E_i$, based on Formula (7).
Step S14: The Δg calculation unit 34c finds a value of $y_k$ in a case where the value of $x_i$ has changed and finds a value of $z_k$ in accordance with Formula (9). Then, the Δg calculation unit 34c determines whether or not the value of $z_k$ has changed from the original value of $z_k$. When determining that the value of $z_k$ has changed from the original value of $z_k$, the Δg calculation unit 34c performs the process in step S15. When determining that the value of $z_k$ has not changed from the original value of $z_k$, the Δg calculation unit 34c performs the process in step S16.
Step S15: The Δg calculation unit 34c calculates a difference value between the held current $g_i^{(k)}$ and $g_i^{(k)}$ calculated based on the value of $x_i$ after the change, in accordance with Formula (13). Alternatively, the Δg calculation unit 34c calculates $\Delta g_i^{(k)}$ in accordance with above-described Formula (14) according to the difference value ($\Delta z_k$) of $z_k$.
Step S16: The ΔH calculation unit 34d calculates $\Delta H_i$ by adding $\Delta E_i$ and $\Delta P_k$ calculated by multiplying $\Delta g_i^{(k)}$ by $-\Delta x_i$.
Step S17: The transition acceptability determination unit 34e determines whether or not to permit the change in the value of $x_i$. In a case where the transition acceptability determination unit 34e determines to permit the change in the value of $x_i$, the process in step S18 is performed. In a case where the transition acceptability determination unit 34e determines not to permit the change in the value of $x_i$, the process in step S19 is performed.
Step S18: The above-described update process is performed by the state update unit 34f and the H-update unit 34g.
Step S19: A determination unit (not illustrated) of the search unit 34 determines whether or not a search end condition is satisfied. For example, in a case where the process in step S12 has been repeated a predetermined number of times, or in a case where a value of the evaluation function smaller than a predetermined value has been obtained, it is determined that the search end condition is satisfied. In a case where it is determined that the search end condition is satisfied, the process in step S20 is performed. In a case where it is determined that the search end condition is not satisfied, the processes from step S12 are repeated.
In a case where the simulated annealing method is applied, while the processes in steps S12 to S19 are repeated, the value of the temperature parameter for generating a threshold value to be used by the transition acceptability determination unit 34e is decreased in accordance with a predetermined temperature parameter switching schedule.
In a case where the replica exchange method is applied, the processes in steps S12 to S19 are performed for each of the plurality of replicas set with different values of the temperature parameter from each other. Then, replica exchange is performed each time the processes in steps S12 to S19 are repeated a predetermined number of times. For example, two of the plurality of replicas are randomly selected, and the values of the temperature parameter or the values of $x_1$ to $x_n$ are exchanged between the two selected replicas with a predetermined exchange probability based on a difference in the values of the evaluation function or a difference in the values of the temperature parameter between the replicas.
Step S20: The output unit 35 outputs a search result. This ends the process by the data processing device 20.
Note that the above order of processes is an example, and the order of processes may be appropriately altered.

(Comparative Example)

FIG. 6 is a diagram illustrating a search unit of a comparative example. In FIG. 6, the same elements as the elements of the search unit 34 of the data processing device 20 illustrated in FIG. 4 are given the same reference signs.
In a search unit 40 of the comparative example, a transition candidate selection unit 41 selects a transition candidate $x_i$ from among $x_1$ to $x_n$, similarly to the transition candidate selection unit 34a. The transition candidate selection unit 41 outputs the values (x') of $x_1$ to $x_n$ when the value of the selected $x_i$ is changed and additionally, outputs $\Delta x_i$ that is a difference value when the value of $x_i$ is changed.
Unlike the search unit 34, the search unit 40 of the comparative example includes a $P_{tot}$ calculation unit 42, a $P_{tot}0$ update unit 43, and a ΔP calculation unit 44.
The $P_{tot}$ calculation unit 42 calculates the total value of the m constraint terms represented by Formula (2), using the values (x') of $x_1$ to $x_n$ when the value of the selected $x_i$ is changed.
The $P_{tot}0$ update unit 43 updates and outputs $P_{tot}0$ that is the total value of the m constraint terms before the value of $x_i$ changes. The value of $P_{tot}0$ is updated to the value of $P_{tot}$ output by the $P_{tot}$ calculation unit 42 when a transition acceptability determination unit 34e permits the change in the value of $x_i$.
The ΔP calculation unit 44 calculates and outputs $\Delta P_{tot}$ that is a difference between $P_{tot}$ and $P_{tot}0$.
In the search unit 40 of the comparative example, a ΔH calculation unit 45 calculates and outputs $\Delta H_i$ by adding $\Delta E_i$ and $\Delta P_{tot}$.
FIG. 7 is a flowchart illustrating a processing procedure of a data processing device including the search unit of the comparative example.

The processes in steps S30 to S33 are the same as the processes in steps S10 to S13 illustrated in FIG. 5.

Step S34: The $P_{tot}$ calculation unit 42 calculates the total value ($P_{tot}$) of the m constraint terms represented by Formula (2), using the values (x') of $x_1$ to $x_n$ when the value of the selected $x_i$ is changed.

Step S35: The ΔP calculation unit 44 calculates $\Delta P_{tot}$ that is a difference between $P_{tot}$ and $P_{tot}0$.

Step S36: the ΔH calculation unit 45 calculates $\Delta H_i$ by adding $\Delta E_i$ and $\Delta P_{tot}$.

The process in step S37 is the same as the process in step S17 illustrated in FIG. 5.

Step S38: An update process for $P_{tot}0$ by the $P_{tot}0$ update unit 43, as well as the update process by a state update unit 34f and an H-update unit 34g, are performed.

The subsequent processes in steps S39 and S40 are the same as the processes in steps S19 and S20 illustrated in FIG. 5.

In such a search unit 40 of the comparative example, in a case where the transition candidate $x_i$ is selected, since $P_{tot}$ is calculated also using the values of the state variables other than $x_i$, for example, the input amount as indicated by Formula (5) will be computed for all the constraint terms.

On the other hand, in the data processing device 20 of the second embodiment, the search unit 34 computes $\Delta g_i^{(k)}$ to be used to calculate the change amount of the constraint term only for the constraint term with which the value of $z_k$ changes in association with the change in the value of $x_i$. Therefore, the processing unit 12 no longer has to perform computation using the values of all the state variables for all the constraint terms every time ΔH; is calculated in association with the change in the value of $x_i$. Accordingly, the amount of computation may be reduced. In addition, since the amount of computation may be reduced, an increase in the amount of hardware materials to perform computation may be suppressed.

In addition, since the ternary $z_k$ or $\Delta z_k$ is used to compute $\Delta g_i^{(k)}$, accumulation of errors may be suppressed as compared with a case of computing the change amount of the constraint term using the input amount that is a real variable as indicated by Formula (5).

(Example of Equipping Search Unit 34 by Hardware)

The search unit 34 can also be equipped by, for example, hardware as follows. Note that the search unit 34 illustrated below holds $h_i$ as indicated by Formula (11) and uses the held $h_i$ to calculate $\Delta H_i$.

FIG. 8 is a diagram illustrating a hardware example of the search unit.

The search unit 34 includes a state variable update circuit 51, an h-update circuit 52, a $y_k$ update circuit 53, a ΔH calculation circuit 54, a selection circuit 55, and a controller 56. Note that FIG. 8 illustrates an example of storing the evaluation function information in the storage unit 32. The storage unit 32 stores n × n instances of $W_{ij}$ to be used to update $h_i$. Furthermore, the storage unit 32 stores m × n coupling coefficients ($C_{ik}$) from $z_k$ to $x_i$ and n × m coupling coefficients ($C_{kj}$) from $x_i$ to $y_k$.

The state variable update circuit 51 holds the values of $x_1$ to $x_n$. In addition, the state variable update circuit 51 changes the value of the state variable with the identification number output by the selection circuit 55 under the control of the controller 56.

The h-update circuit 52 holds the value of $h_i$ (i = 1 to n) indicated by Formula (11). In addition, the h-update circuit 52 updates the value of $h_i$ under the control of the controller 56.

The $y_k$ update circuit 53 holds the value of $y_k$ indicated by Formula (8). In addition, the $y_k$ update circuit 53 updates the value of $y_k$ under the control of the controller 56.

More specific examples of the h-update circuit 52 and the $y_k$ update circuit 53 will be described later (refer to FIG. 9).

The ΔH calculation circuit 54 calculates $\Delta H_i$ (i = 1 to n) by multiplying $h_i$ by $-\Delta x_i$.

The selection circuit 55 selects one state variable that permits the change in the value from among $x_1$ to $x_n$, based on $\Delta H_i$ associated with the change in the value of each of $x_1$ to $x_n$ and a threshold value supplied from the controller 56.

For example, the selection circuit 55 computes max(0, $\Delta H_i$) for each of $\Delta H_1$ to $\Delta H_n$. A function that maintains any of $\Delta H_1$ to $\Delta H_n$ having 0 or more as it is and transforms any of $\Delta H_1$ to $\Delta H_n$ being negative into 0 is denoted by max(0, $\Delta H_i$). The selection circuit 55 adds a threshold value (which may have n different values or may have the same value) to each of n instances of max(0, $\Delta H_i$). The selection circuit 55 outputs the identification number of the state variable, among $x_1$ to $x_n$, that gives the minimum addition result when the value has changed.

However, the selection circuit 55 is not limited to one that performs the selection operation as described above. The selection circuit 55 may permit the change in the value of $x_i$ in a case where $\Delta H_i$ is smaller than a threshold value. In a case where the change in the values of a plurality of instances of $x_i$ is permitted, the selection circuit 55 may select one state variable randomly or in accordance with a predetermined rule and output the identification number of the selected state variable.

The controller 56 controls an operation timing of each circuit of the search unit 34 by sending a control signal or a clock signal. In addition, the controller 56 generates a threshold value and supplies the generated threshold value to the selection circuit 55. For example, log(rand) $\times$ T is used as the threshold value.

FIG. 9 is a diagram illustrating an example of the h-update circuit and the $y_k$ update circuit.

The h-update circuit 52 includes a g/$\Delta$g calculation circuit 52a, a difference addition circuit 52b, and an h-holding circuit 52c.

The $y_k$ update circuit 53 includes a difference addition circuit 53a and a $y_k$ holding circuit 53b.

The g/$\Delta$g calculation circuit 52a calculates $g_i^{(k)}$ or $\Delta g_i^{(k)}$. An example of the g/$\Delta$g calculation circuit 52a will be described later (refer to FIG. 10).

In a case where the change in the value of $x_j$ is permitted, the difference addition circuit 52b receives the control signal from the controller 56 and updates $h_i$ by adding $W_{ij}\Delta x_j$ to the original $h_i$. In a case where $\Delta g_i^{(k)}$ occurs when the change in the value of $x_j$ is permitted, the difference addition circuit 52b further adds $\Delta g_i^{(k)}$ to $h_i$ to update $h_i$.

The h-holding circuit 52c holds n instances of $h_i$. In addition, the h-holding circuit 52c outputs $h_i$ in synchronization with the clock signal.

In a case where the change in the value of $x_j$ is permitted, the difference addition circuit 53a receives the control signal from the controller 56 and updates $y_k$ by adding $Ck_j\Delta x_j$ to the original $y_k$.

The $y_k$ holding circuit 53b holds m instances of $y_k$. In addition, the $y_k$ holding circuit 53b outputs $y_k$ in synchronization with the clock signal.

FIG. 10 is a diagram illustrating an example of a g-calculation circuit that is an example of the g/$\Delta$g calculation circuit.

The g-calculation circuit 52a1 includes a multiplier 60, a selection circuit 61, and a multiplier 62.

The multiplier 60 outputs a product of 1 and 1 - $x_i$.

The selection circuit 61 receives $y_k$ and outputs 0 if $y_k < 0$ is met, outputs 1 - $x_i$ if $y_k = 0$ is met, and outputs 1 if $y_k > 0$ is met.

The multiplier 62 outputs a product of the output of the selection circuit 61 and $-\lambda_k C_{ki}$, as $g_i^{(k)}$ indicated by Formula (13).

FIG. 11 is a diagram illustrating an example of a $\Delta$g calculation circuit that is an example of the g/$\Delta$g calculation circuit.

The $\Delta$g calculation circuit 52a2 includes a $z_k$ generation circuit 65 and a $\Delta$g generation circuit 66.

The $z_k$ generation circuit 65 receives $y_k$ and outputs $z_k = 0$ if $y_k < 0$ is met, outputs $z_k = 1$ if $y_k = 0$ is met, and outputs $z_k = 2$ if $y_k > 0$ is met.

The $\Delta$g generation circuit 66 holds $z_k$. In a case where the value of $z_k$ generated by the $z_k$ generation circuit 65 and the held value of $z_k$ have changed between 0 and 1, the $\Delta$g generation circuit 66 selects 1 - $x_i$ and outputs $-\lambda_k C_{ki}(1 - x_i)\Delta z_k$, as $\Delta g_i^{(k)}$. In a case where the value of $z_k$ generated by the $z_k$ generation circuit 65 and the held value of $z_k$ have changed between 1 and 2, the $\Delta$g generation circuit 66 selects $x_i$ and outputs $-\lambda_k C_{ki} x_i \Delta z_k$, as $\Delta g_i^{(k)}$

FIG. 12 is a timing chart illustrating an example of operation timings of the data processing device. FIG. 12 illustrates an example of operation timings in a case where the search unit 34 having the hardware configuration illustrated in FIG. 8 is used. FIG. 12 illustrates a processing example in a case where 15 replicas are used. The search unit 34 performs processes in order from the replica with the replica number = 0 while shifting the timing by a pipeline process.

From a timing t1, a process in which the $\Delta$H calculation circuit 54 calculates $\Delta H_i$ (i = 1 to n) from $h_i$ is performed.

From a timing t2, a process in which the selection circuit 55 selects the state variable ($x_j$) that permits the change in the value, from among $x_1$ to $x_n$, is performed.

From a timing t3, a process in which the state variable update circuit 51 changes the value (inverts 0 to 1 or 1 to 0) of $x_j$ selected by the selection circuit 55 is performed.

From a timing t4, a process in which the h-update circuit 52 and the $y_k$ update circuit 53 update $h_i$ and $y_k$ is performed.

From a timing t5, a process in which the h-update circuit 52 calculates $z_k$ from $y_k$ is performed.

From a timing t6, a process in which the h-update circuit 52 calculates $\Delta g_i^{(k)}$ from $z_k$ and $x_i$ is performed.

From a timing t7, a process in which the h-update circuit 52 further updates $h_i$, using $\Delta g_i^{(k)}$, is performed.

Thereafter, similar processes are repeated.

Each of the above processes can be started at the time point when the previous process for the replica with the replica number = 0 has ended even if the immediately preceding process is not completed for all 15 replicas.

By such a hardware process, $\Delta g_i^{(k)}$ to be used to update $h_i$ is calculated only for the constraint term with which the value of $z_k$ changes in association with the change in the value of $x_j$. Therefore, the processing unit 12 no longer has to perform computation using the values of all the state variables for all the constraint terms every time $h_i$ (i = 1 to n) is updated. Accordingly, the amount of computation may be reduced.

Note that the hardware process as described above can also be performed by the CPU 21 executing a program.

(Modifications)

In the above description, $C_{ki}$ used to calculate $y_k$ in Formula (8) is assumed to have 1 when $x_i$ affects the constraint with the identification number = k and have 0 when $x_i$ does not affect the constraint with the identification number = k.

However, $C_{ki}$ may be a ternary value of -1, 0, or 1. In the following, it is assumed that $C_{ki}$ = 1 is met in a case where $x_i$ gives a positive contribution to the constraint with the identification number = k, $C_{ki}$ = -1 is met in a case where $x_i$ gives a negative contribution to the constraint with the identification number = k, and $C_{ki}$ = 0 is met in a case where $x_i$ does not affect the constraint with the identification number = k.

FIGs. 13A and 13B are diagrams illustrating an example of a relationship between $P_k$ and $y_k$ and a relationship between $g_i^{(k)}$ and $y_k$ in a case where the constraint condition is an inequality constraint and $C_{ki}$ has a ternary value.

In FIG. 13A illustrating a relationship between $P_k$ and $y_k$, the horizontal axis represents the value of $y_k$, and the vertical axis represents the value of $P_k$. In a case where the constraint condition is an inequality constraint, $P_k$ is represented by a function as indicated by Formula (3). Therefore, when $y_k$ representing the input amount is 0 or less, $P_k$ = 0 is met, and when $y_k$ is greater than 0, $P_k$ = $y_k$ is met.

In FIG. 13B illustrating a relationship between $g_i^{(k)}$ and $y_k$, the horizontal axis represents the value of $y_k$, and the vertical axis represents the value of $g_i^{(k)}$.

As in FIG. 13B, in a case of $C_{ki}\Delta x_i > 0$, $g_i^{(k)} = -\lambda_k C_{ki}$ is met when $y_k$ = 0. In a case of $C_{ki}\Delta x_i < 0$, $g_i^{(k)} = 0$ is met when $y_k$ = 0.

FIGs. 14A and 14B are diagrams illustrating an example of a relationship between $P_k$ and $y_k$ and a relationship between $g_i^{(k)}$ and $y_k$ in a case where the constraint condition is an equality constraint and $C_{ki}$ has a ternary value.

In FIG. 14A illustrating a relationship between $P_k$ and $y_k$, the horizontal axis represents the value of $y_k$, and the vertical axis represents the value of $P_k$. In a case where the constraint condition is an equality constraint, $P_k$ is represented by a function as indicated by Formula (4). Therefore, $P_k = |y_k|$ is met.

In FIG. 14B illustrating a relationship between $g_i^{(k)}$ and $y_k$, the horizontal axis represents the value of $y_k$, and the vertical axis represents the value of $g_i^{(k)}$.

As in FIG. 14B, in a case of $C_{ki}\Delta x_i > 0$, $g_i^{(k)} = -\lambda_k^+ C_{ki}$ is met when $y_k$ = 0. In a case of $C_{ki}\Delta x_i < 0$, $g_i^{(k)} = +\lambda_k^- C_{ki}$ is met when $y_k$ = 0.

When the ternary $C_{ki}$ as described above is used, since the change in $y_k$ due to $\Delta x_i$ is $C_{ki}\Delta x_i$, $z_k$ generated from $y_k$ can be represented by following Formula (17).

[Mathematical Formula 17]

$$\boldsymbol{z_k} = (z_k^+, z_k^-) = \begin{cases} (0,0) & if \quad y_k < 0 \\ (1,0) & if \quad y_k = 0 \\ (1,1) & if \quad y_k > 0 \end{cases} \qquad (17)$$

Assuming that $z_k$ corresponding to $\Delta x_i$ is $z_i^{(k)}$, $z_i^{(k)}$ can be represented by following Formula (18).

[Mathematical Formula 18]

$$z_i^{(k)} = \begin{cases} z_k^+ & if \quad C_{ki}\Delta x_i > 0 \\ z_k^- & if \quad C_{ki}\Delta x_i < 0 \end{cases} \qquad (18)$$

By using such $z_i^{(k)}$, $\Delta g_i^{(k)}$ can be represented by following Formula (19).

[Mathematical Formula 19]

$$\Delta g_i^{(k)} = -\lambda_k C_{ki} \Delta z_i^{(k)} \qquad (19)$$

FIG. 15 is a diagram illustrating a $\Delta$g calculation circuit according to a modification.

The $\Delta$g calculation circuit 52a3 includes a $z_k$ generation circuit 70, a $\Delta z_i^{(k)}$ generation circuit 71, and a multiplier 72.

The $z_k$ generation circuit 70 receives $y_k$ and, assuming $z_k = (z_k^+, z_k^-)$, outputs (0, 0) if $y_k < 0$ is met, outputs (1,

0) if $y_k = 0$ is met, outputs (1, 1) if $y_k > 0$ is met.

The $\Delta z_i^{(k)}$ generation circuit 71 receives $C_{ki}\Delta x_i$. Then, if $C_{ki}\Delta x_i > 0$ is met, the $\Delta z_i^{(k)}$ generation circuit 71 outputs a difference value between $z_k^+$ and the original $z_i^{(k)}$, as $\Delta_{zi}^{(k)}$. If $C_{ki}\Delta x_i < 0$ is met, the $\Delta z_i^{(k)}$ generation circuit 71 outputs a difference value between $z_k^-$ and the original $z_i^{(k)}$, as $\Delta z_i^{(k)}$.

The multiplier 72 outputs a product of $\Delta z_i^{(k)}$ and $-\lambda_k C_{ki}$, as $\Delta g_i^{(k)}$.

In a case where the ternary $C_{ki}$ as described above is used, such a $\Delta$g calculation circuit 52a3 can be used instead of the $\Delta$g calculation circuit 52a2 illustrated in FIG. 11.

Note that, as described above, the processing contents of the data processing devices 10 and 20 of the above respective embodiments can be implemented by causing the data processing devices 10 and 20 to execute a program.

The program can be recorded beforehand on a computer-readable recording medium (for example, the recording medium 26a). As the recording medium, for example, a magnetic disk, an optical disc, a magneto-optical disk, a semiconductor memory, or the like can be used. Examples of the magnetic disk include an FD and an HDD. Examples of the optical disc include a CD, a CD-recordable (R)/rewritable (RW), a DVD, and a DVD-R/RW. The program is sometimes recorded on a portable recording medium and distributed. In that case, the program may be copied from the portable recording medium to another recording medium (for example, the HDD 23) and then executed.

While one form of the program, the data processing device, and the data processing method according to the embodiments has been described based on the embodiments, these embodiments are merely examples and are not limited to the above description.

For example, in the above description, the state variable is assumed to have a value of 0 or 1, but a variable having a value of -1 or +1 can also be used as the state variable by appropriately transforming the formulas.

## Claims

**1.** A data processing program comprising instructions which, when executed by a computer, cause the computer to execute processing comprising:

acquiring, from a storage unit, evaluation function information on an evaluation function of a combinatorial optimization problem that includes a cost term and a plurality of constraint terms;
specifying, for each of the plurality of constraint terms, values of a first auxiliary variable that represents an input amount subjected to a constraint that relates to each of the plurality of constraint terms, based on the evaluation function information;
generating values of a second auxiliary variable obtained by quantizing the first auxiliary variable, based on the values of the first auxiliary variable;
for a first constraint term, among the plurality of constraint terms, with which the values of the second auxiliary variable change in association with a change in values of a first state variable among a plurality of state variables of the evaluation function, calculating a first difference value of a contribution amount of the first constraint term associated with the change in the values of the first state variable, to a first change amount in values of the evaluation function associated with the change in the values of the first state variable; and
calculating the first change amount by using the first difference value, or updating a local field to be used to specify a second change amount in the values of the evaluation function associated with the change in each of the plurality of state variables, by using the first difference value.

**2.** The data processing program according to claim 1, the processing further comprising:

calculating the first change amount by adding a third change amount of the cost term associated with the change in the values of the first state variable and a fourth change amount of the first constraint term obtained from the first difference value;
determining whether or not to permit the change in the values of the first state variable, based on a comparison result between the first change amount and a threshold value; and
updating the values of the first state variable when it is determined to permit the change in the values of the first state variable.

**3.** The data processing program according to claim 1, the processing further comprising:

holding the local field; and
updating the local field by adding the first difference value to the local field for each of the plurality of state variables when the change in the values of the first state variable is permitted.

**4.** The data processing program according to claim 1, wherein the second auxiliary variable is a ternary value that indicates whether the values of the first auxiliary variable are positive, negative, or zero.

**5.** The data processing program according to claim 1, the processing further comprising:

calculating a second difference value of the values of the second auxiliary variable associated with the change in the values of the first state variable; and
calculating the first difference value, based on the second difference value, the values of the first state variable, and a weight value between the first state variable and the first constraint term.

**6.** A data processing apparatus comprising:

a storage unit configured to store evaluation function information on an evaluation function of a combinatorial optimization problem that includes a cost term and a plurality of constraint terms;
a processing unit configured to perform processing including:

specifying, for each of the plurality of constraint terms, values of a first auxiliary variable that represents an input amount subjected to a constraint that relates to each of the plurality of constraint terms, based on the evaluation function information;
generating values of a second auxiliary variable obtained by quantizing the first auxiliary variable, based on the values of the first auxiliary variable;
for a first constraint term, among the plurality of constraint terms, with which the values of the second auxiliary variable change in association with a change in values of a first state variable among a plurality of state variables of the evaluation function, calculating a first difference value of a contribution amount of the first constraint term associated with the change in the values of the first state variable, to a first change amount in values of the evaluation function associated with the change in the values of the first state variable; and
calculating the first change amount by using the first difference value, or updating a local field to be used to specify a second change amount in the values of the evaluation function associated with the change in each of the plurality of state variables, by using the first difference value.

**7.** A data processing method implemented by a computer, the data processing method comprising:

acquiring, from a storage unit, evaluation function information on an evaluation function of a combinatorial optimization problem that includes a cost term and a plurality of constraint terms;
specifying, for each of the plurality of constraint terms, values of a first auxiliary variable that represents an input amount subjected to a constraint that relates to each of the plurality of constraint terms, based on the evaluation function information;
generating values of a second auxiliary variable obtained by quantizing the first auxiliary variable, based on the values of the first auxiliary variable;
for a first constraint term, among the plurality of constraint terms, with which the values of the second auxiliary variable change in association with a change in values of a first state variable among a plurality of state variables of the evaluation function, calculating a first difference value of a contribution amount of the first constraint term associated with the change in the values of the first state variable, to a first change amount in values of the evaluation function associated with the change in the values of the first state variable; and
calculating the first change amount by using the first difference value, or updating a local field to be used to specify a second change amount in the values of the evaluation function associated with the change in each of the plurality of state variables, by using the first difference value.

FIG. 1

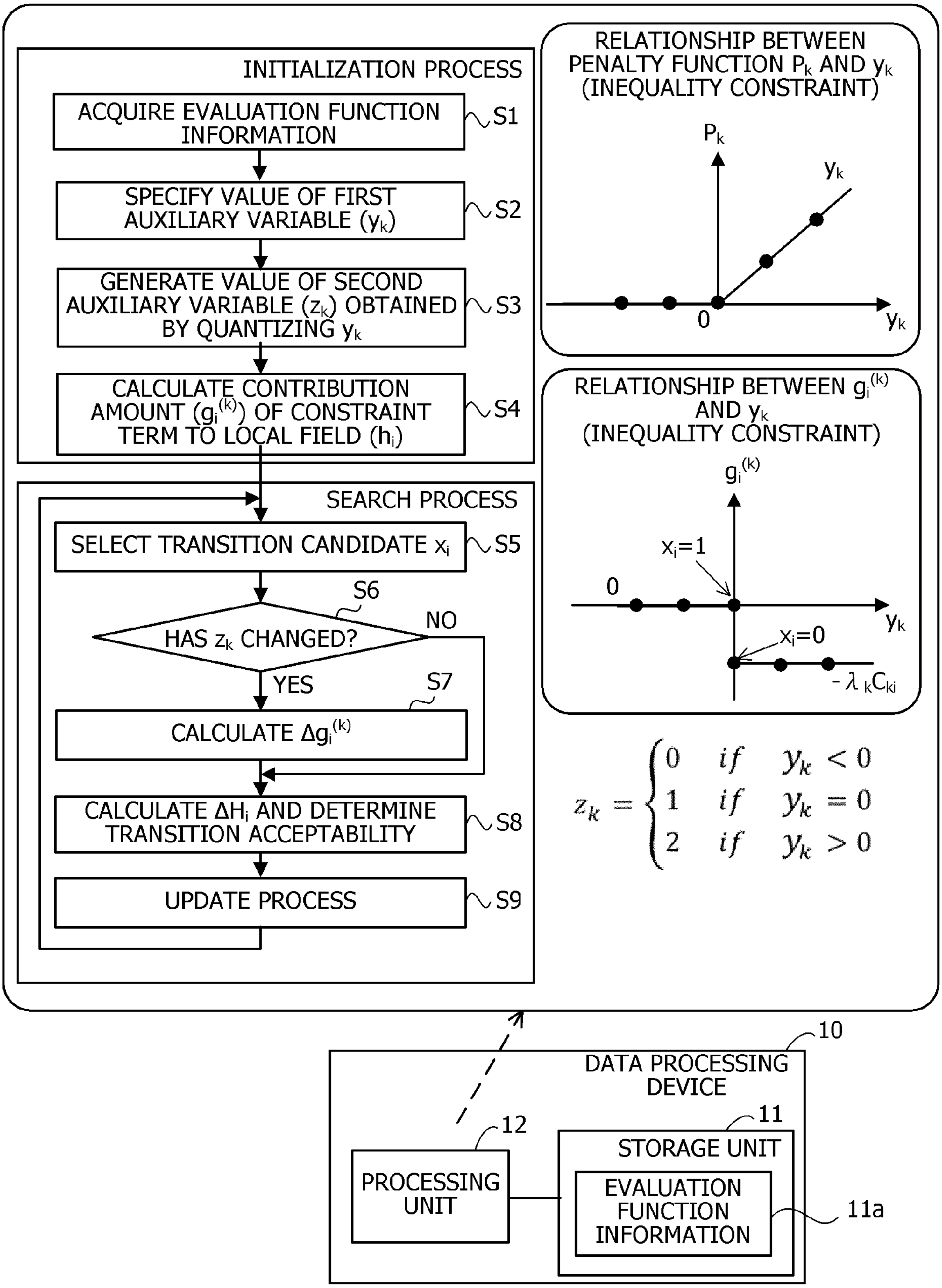
INITIALIZATION PROCESS
ACQUIRE EVALUATION FUNCTION INFORMATION
S1
SPECIFY VALUE OF FIRST AUXILIARY VARIABLE ($y_k$)
S2
GENERATE VALUE OF SECOND AUXILIARY VARIABLE ($z_k$) OBTAINED BY QUANTIZING $y_k$
S3
CALCULATE CONTRIBUTION AMOUNT ($g_i^{(k)}$) OF CONSTRAINT TERM TO LOCAL FIELD ($h_i$)
S4
SEARCH PROCESS
SELECT TRANSITION CANDIDATE $x_i$
S5
S6
HAS $z_k$ CHANGED?
NO
YES
S7
CALCULATE $\Delta g_i^{(k)}$
CALCULATE $\Delta H_i$ AND DETERMINE TRANSITION ACCEPTABILITY
S8
UPDATE PROCESS
S9
RELATIONSHIP BETWEEN PENALTY FUNCTION $P_k$ AND $y_k$ (INEQUALITY CONSTRAINT)
$P_k$
$y_k$
0
$y_k$
RELATIONSHIP BETWEEN $g_i^{(k)}$ AND $y_k$ (INEQUALITY CONSTRAINT)
$g_i^{(k)}$
$x_i=1$
0
$y_k$
$x_i=0$
$-\lambda_k C_{ki}$
$z_k = \begin{cases} 0 & if \quad y_k < 0 \\ 1 & if \quad y_k = 0 \\ 2 & if \quad y_k > 0 \end{cases}$
10
DATA PROCESSING DEVICE
12
PROCESSING UNIT
11
STORAGE UNIT
EVALUATION FUNCTION INFORMATION
11a

FIG. 2A

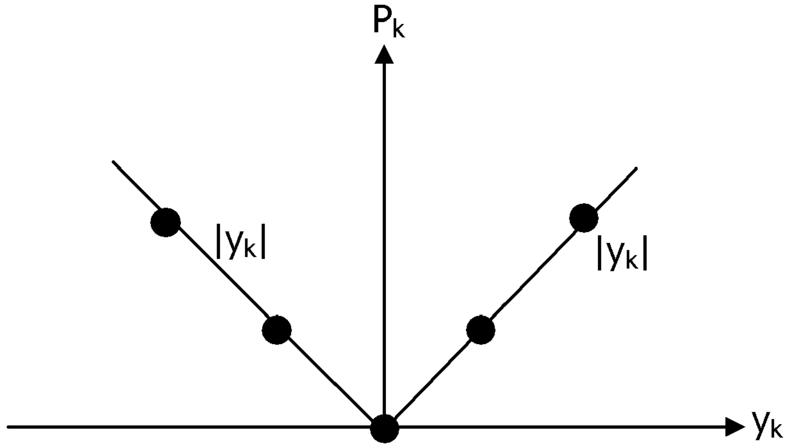


FIG. 2B

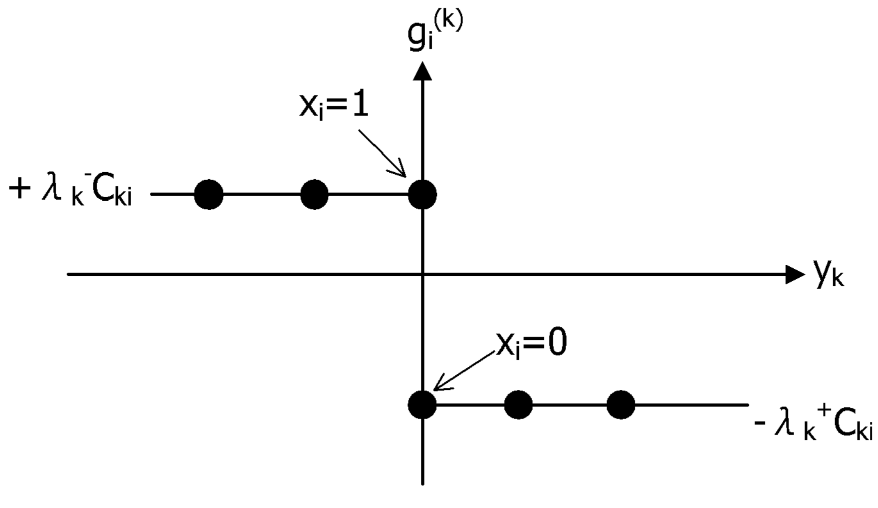

FIG. 3

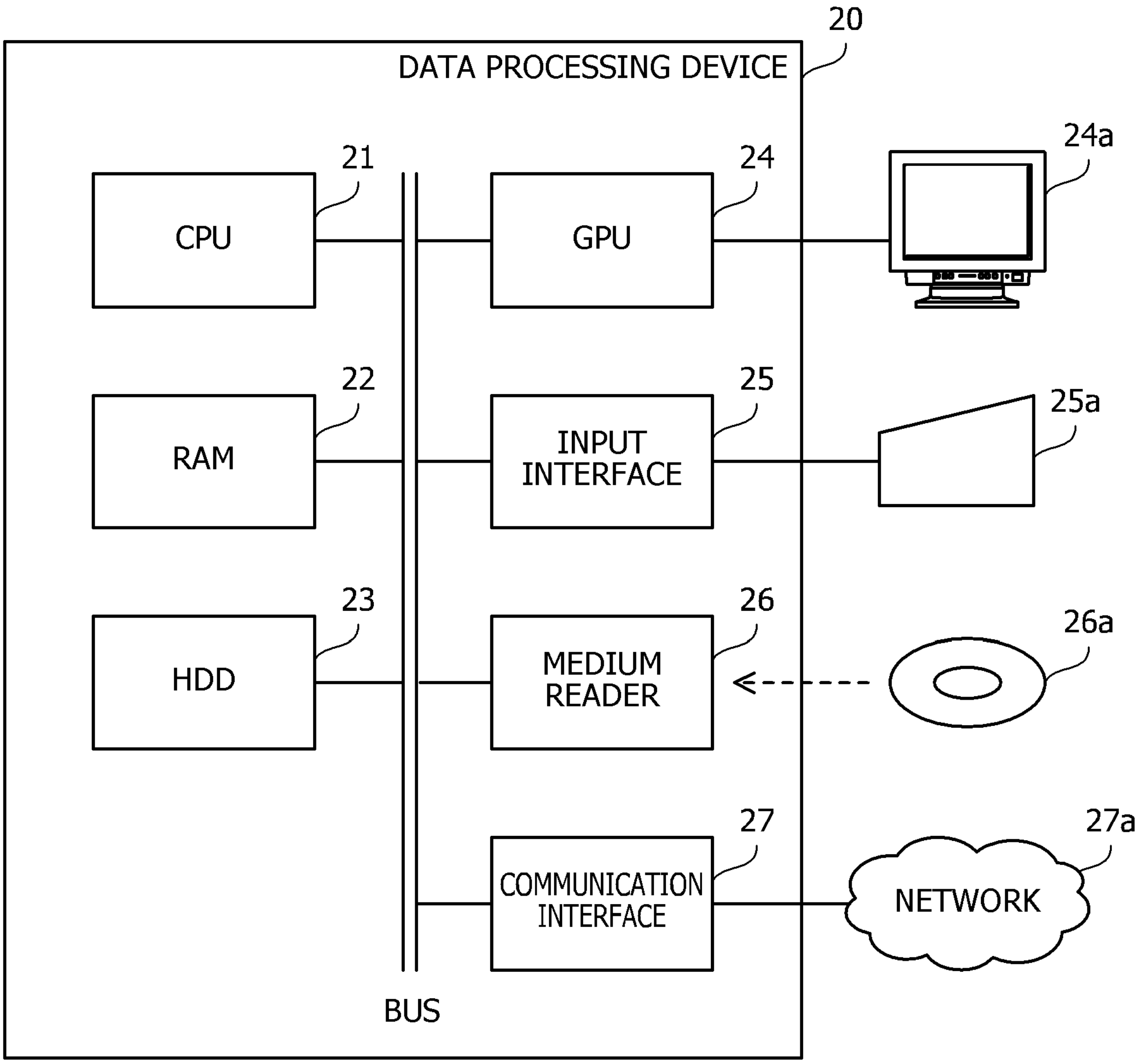
20
DATA PROCESSING DEVICE
21
CPU
22
RAM
23
HDD
24
GPU
25
INPUT INTERFACE
26
MEDIUM READER
27
COMMUNICATION INTERFACE
BUS
24a
25a
26a
27a
NETWORK

FIG. 4

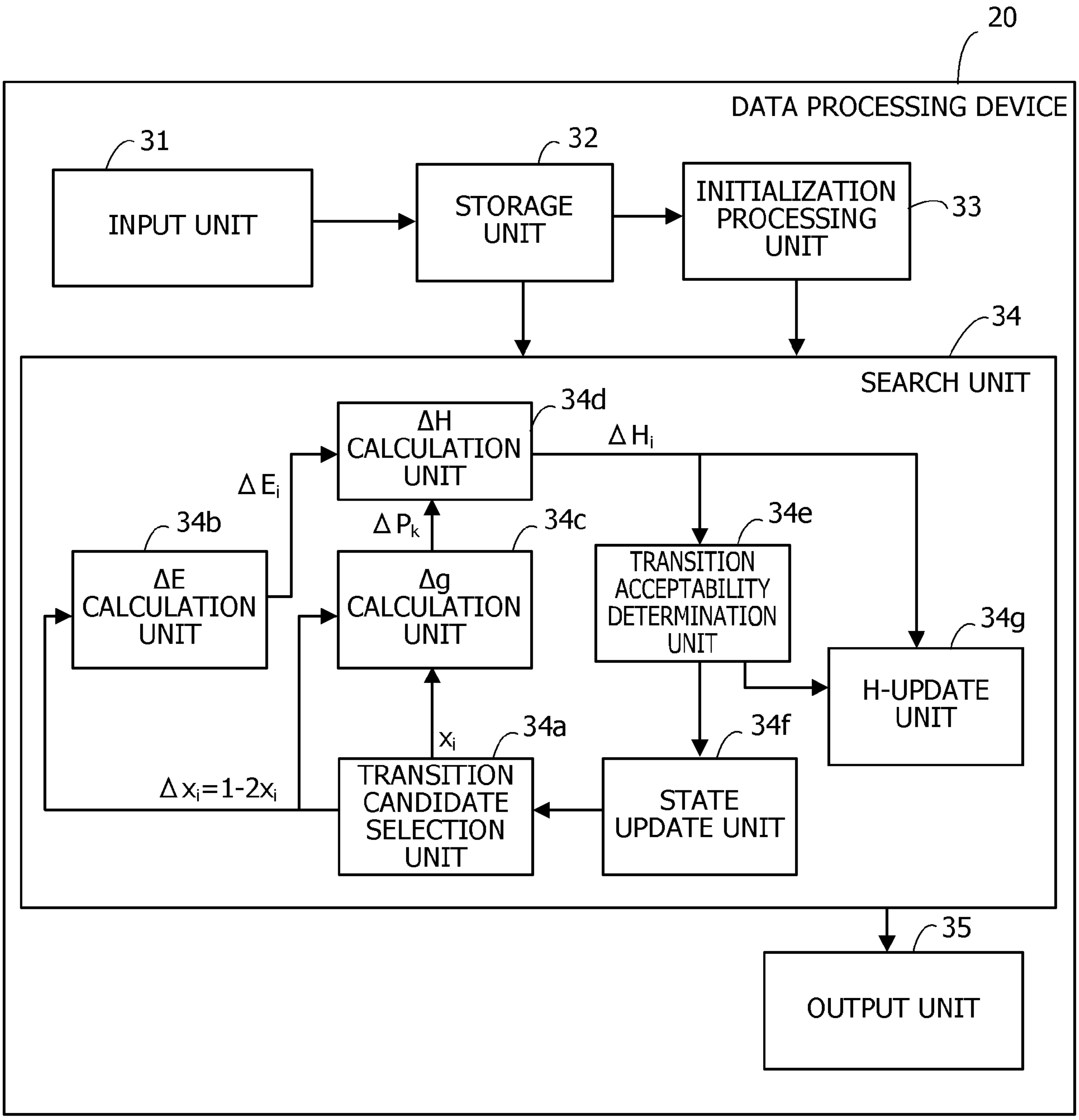
20
DATA PROCESSING DEVICE
31
INPUT UNIT
32
STORAGE UNIT
INITIALIZATION PROCESSING UNIT
33
34
SEARCH UNIT
34d
ΔH CALCULATION UNIT
ΔHi
ΔEi
34b
ΔE CALCULATION UNIT
ΔPk
34c
Δg CALCULATION UNIT
34e
TRANSITION ACCEPTABILITY DETERMINATION UNIT
34g
H-UPDATE UNIT
xi
34a
Δxi=1-2xi
TRANSITION CANDIDATE SELECTION UNIT
34f
STATE UPDATE UNIT
35
OUTPUT UNIT

FIG. 5

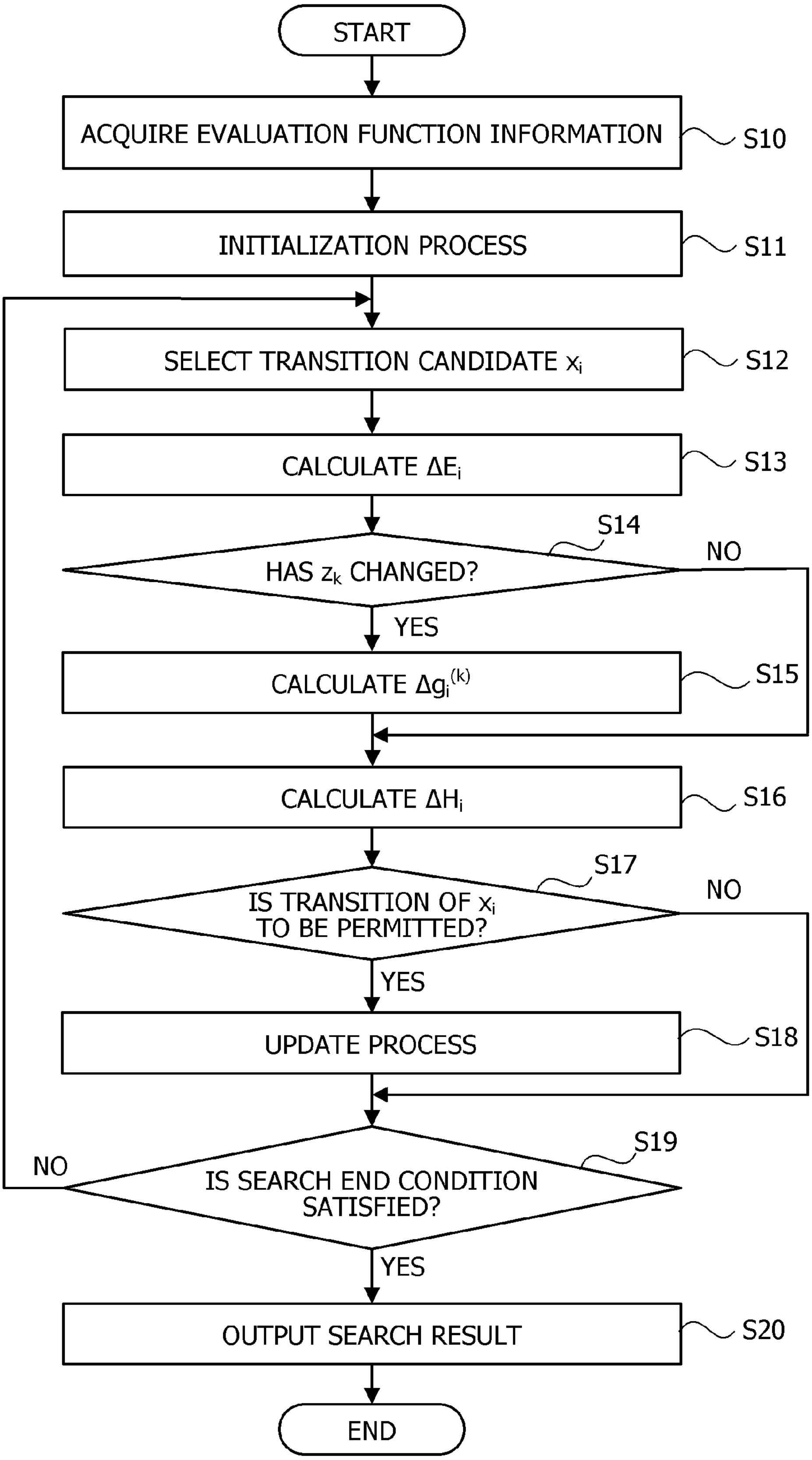
START
ACQUIRE EVALUATION FUNCTION INFORMATION
S10
INITIALIZATION PROCESS
S11
SELECT TRANSITION CANDIDATE $x_i$
S12
CALCULATE $\Delta E_i$
S13
S14
HAS $z_k$ CHANGED?
NO
YES
CALCULATE $\Delta g_i^{(k)}$
S15
CALCULATE $\Delta H_i$
S16
S17
IS TRANSITION OF $x_i$ TO BE PERMITTED?
NO
YES
UPDATE PROCESS
S18
S19
NO
IS SEARCH END CONDITION SATISFIED?
YES
OUTPUT SEARCH RESULT
S20
END

FIG. 6

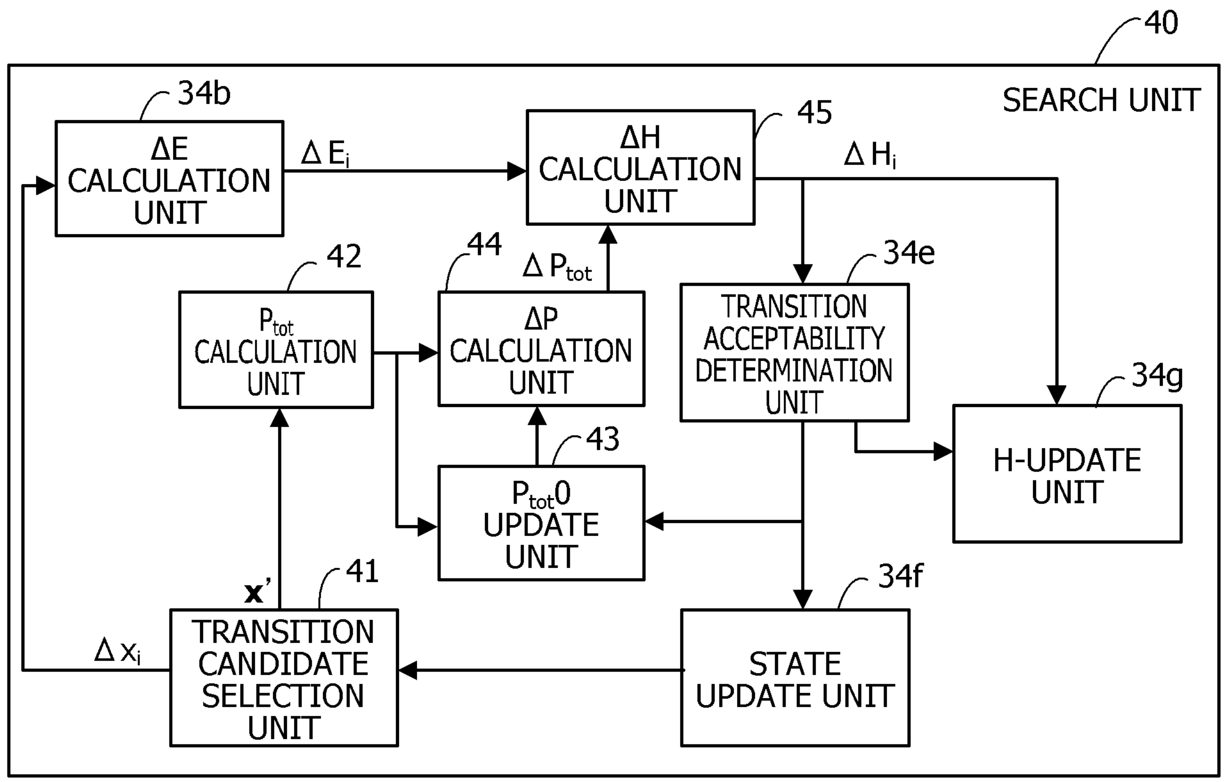
40
SEARCH UNIT
34b
ΔE CALCULATION UNIT
Δ Ei
45
ΔH CALCULATION UNIT
Δ Hi
42
Ptot CALCULATION UNIT
44
Δ Ptot
ΔP CALCULATION UNIT
34e
TRANSITION ACCEPTABILITY DETERMINATION UNIT
34g
H-UPDATE UNIT
43
Ptot0 UPDATE UNIT
41
x'
Δ xi
TRANSITION CANDIDATE SELECTION UNIT
34f
STATE UPDATE UNIT

FIG. 7

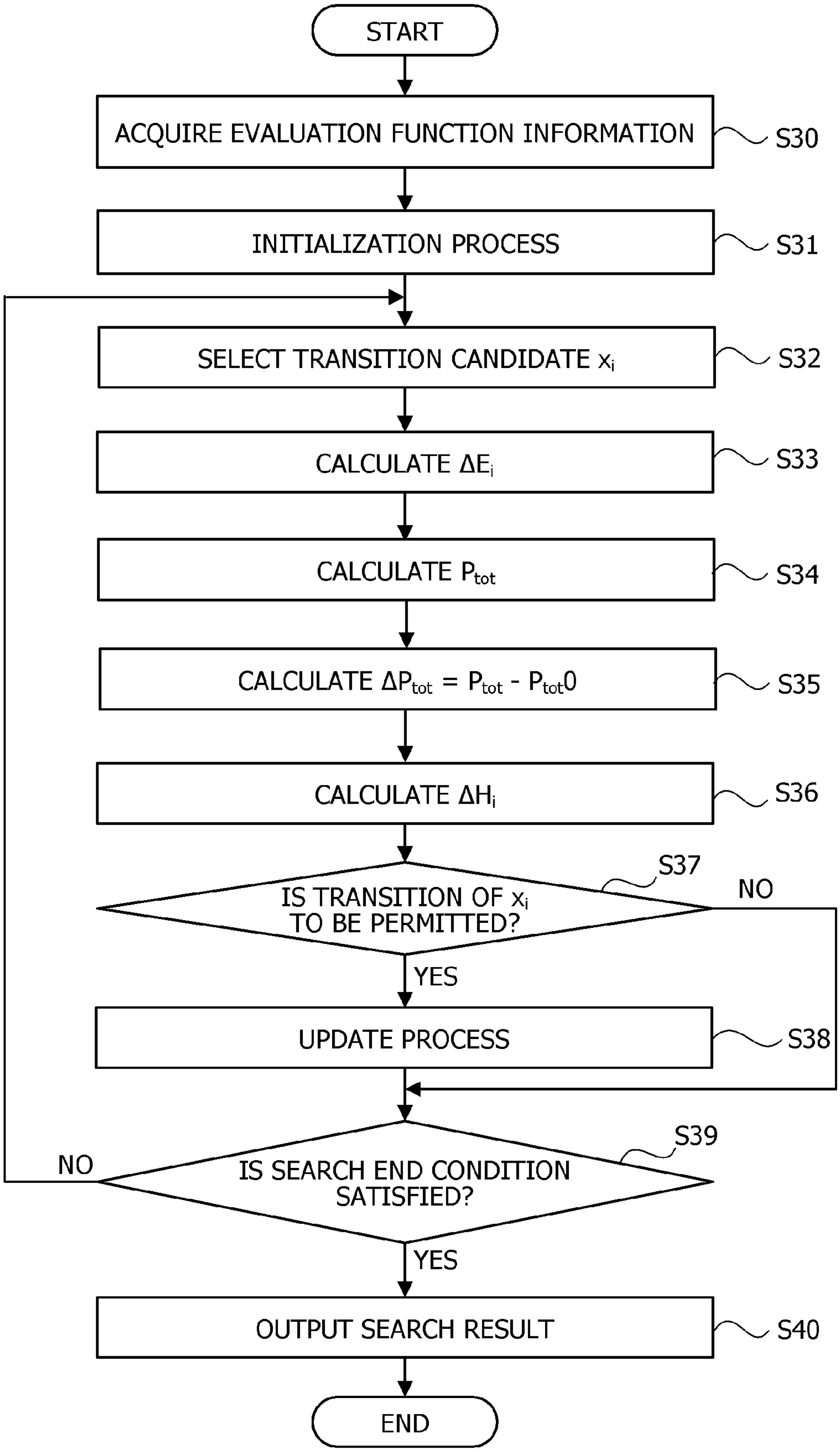
START
ACQUIRE EVALUATION FUNCTION INFORMATION
S30
INITIALIZATION PROCESS
S31
SELECT TRANSITION CANDIDATE $x_i$
S32
CALCULATE $\Delta E_i$
S33
CALCULATE $P_{tot}$
S34
CALCULATE $\Delta P_{tot} = P_{tot} - P_{tot}0$
S35
CALCULATE $\Delta H_i$
S36
S37
IS TRANSITION OF $x_i$ TO BE PERMITTED?
NO
YES
UPDATE PROCESS
S38
S39
NO
IS SEARCH END CONDITION SATISFIED?
YES
OUTPUT SEARCH RESULT
S40
END

FIG. 8

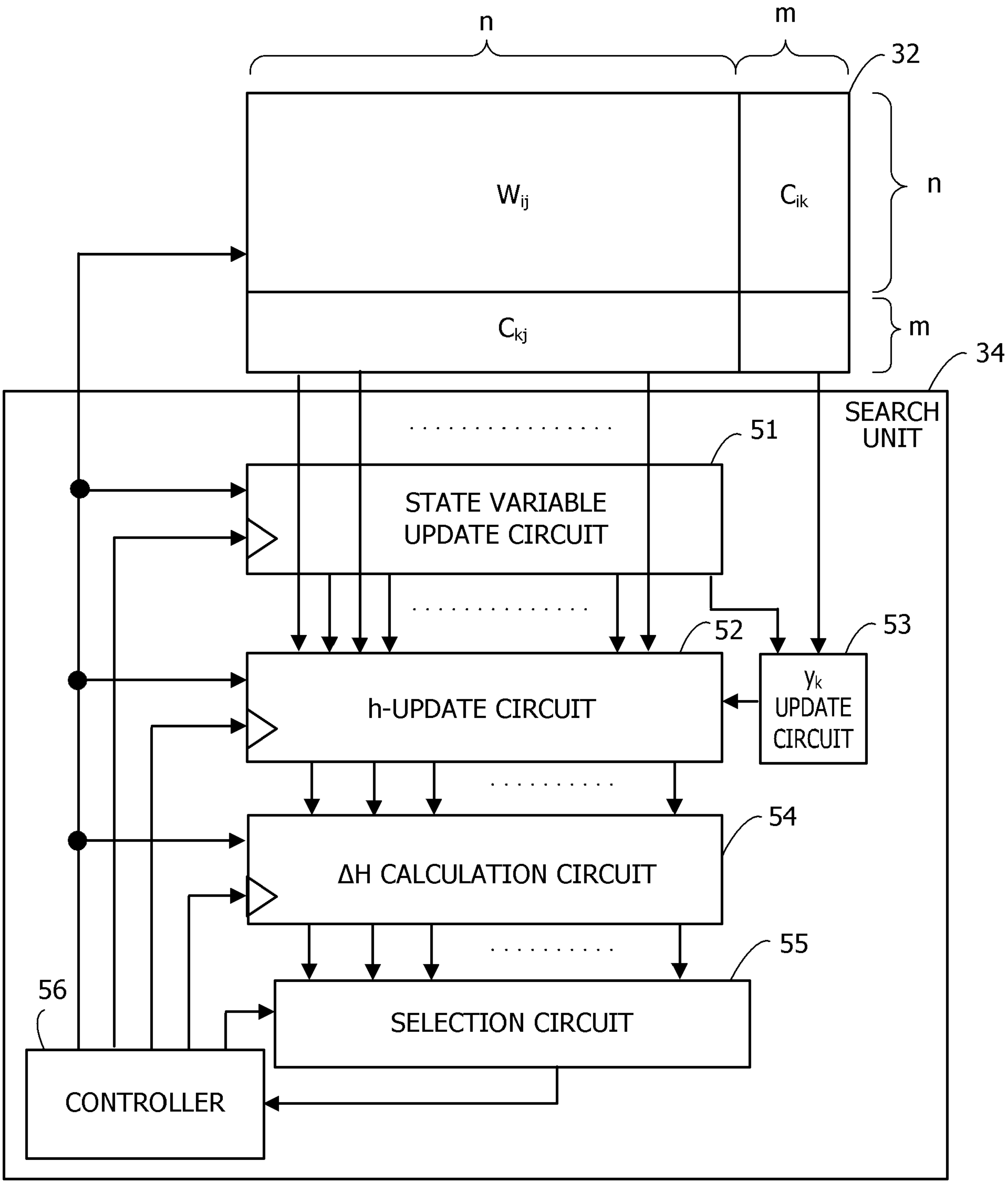
n
m
32
$W_{ij}$
$C_{ik}$
n
$C_{kj}$
m
34
SEARCH UNIT
51
STATE VARIABLE UPDATE CIRCUIT
52
53
h-UPDATE CIRCUIT
$y_k$ UPDATE CIRCUIT
54
ΔH CALCULATION CIRCUIT
55
56
SELECTION CIRCUIT
CONTROLLER

FIG. 9

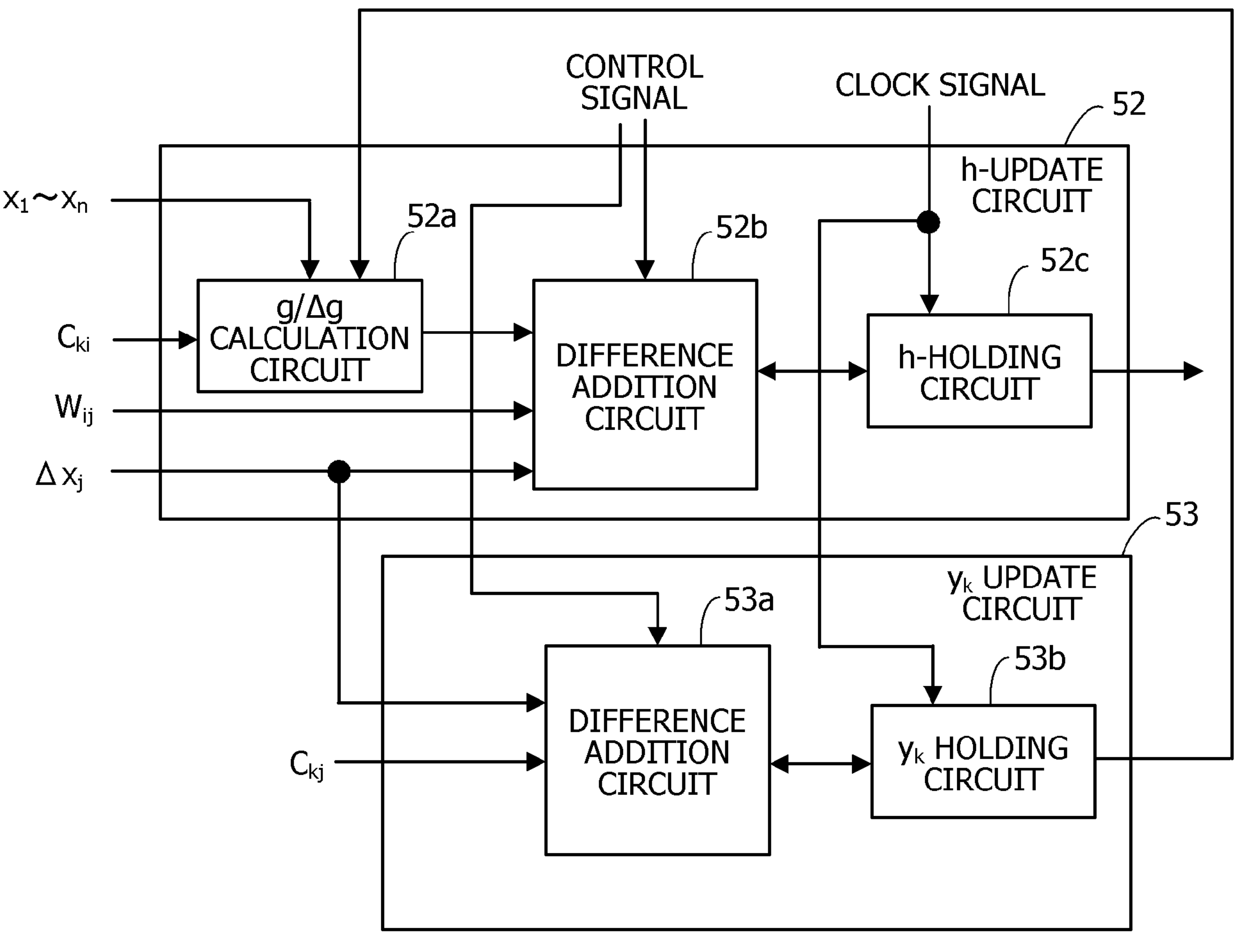
CONTROL SIGNAL
CLOCK SIGNAL
52
h-UPDATE CIRCUIT
x1~xn
52a
52b
52c
g/Δg CALCULATION CIRCUIT
DIFFERENCE ADDITION CIRCUIT
h-HOLDING CIRCUIT
Cki
Wij
Δxj
53
yk UPDATE CIRCUIT
53a
53b
DIFFERENCE ADDITION CIRCUIT
yk HOLDING CIRCUIT
Ckj

FIG. 10

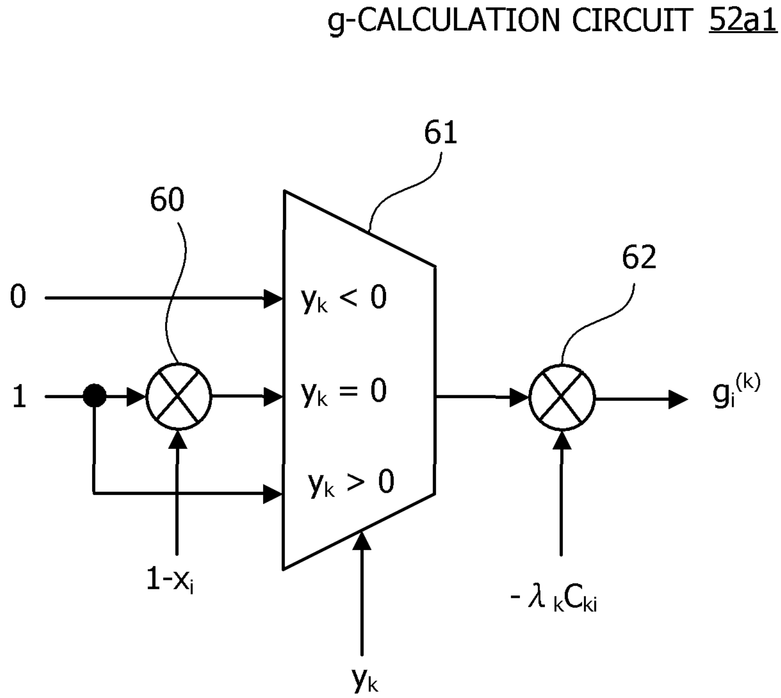
g-CALCULATION CIRCUIT 52a1
61
60
62
0
1
$y_k < 0$
$y_k = 0$
$y_k > 0$
$g_i^{(k)}$
$1-x_i$
$-\lambda_k C_{ki}$
$y_k$

FIG. 11

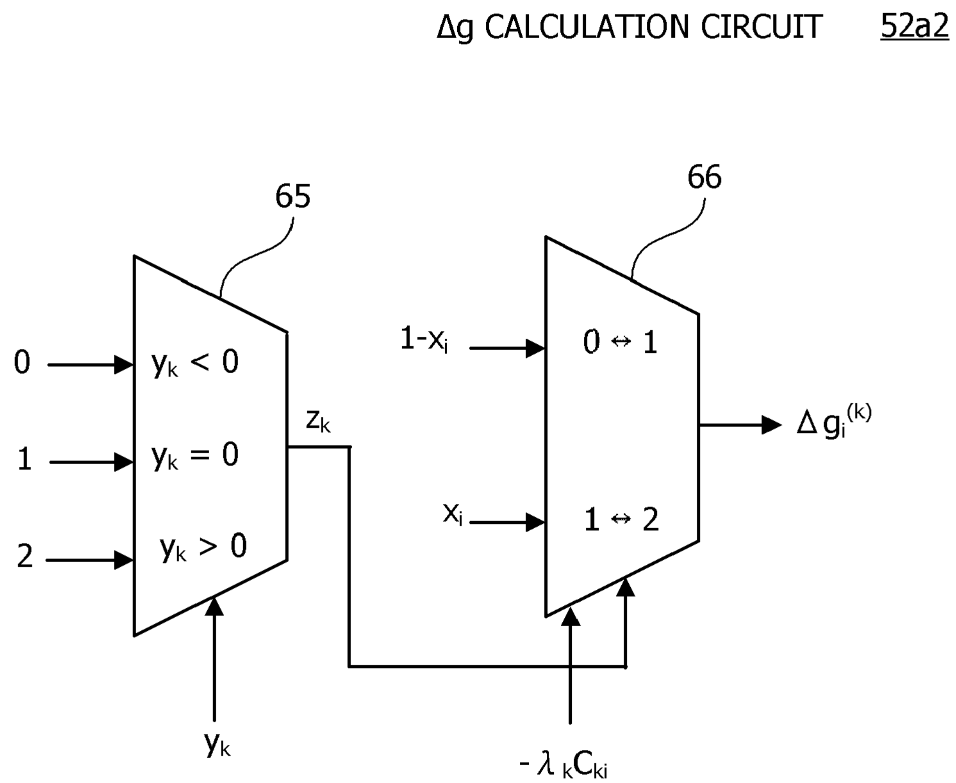
Δg CALCULATION CIRCUIT 52a2
65
66
0
1
2
yk < 0
yk = 0
yk > 0
zk
yk
1-xi
xi
0 ↔ 1
1 ↔ 2
Δgi(k)
-λkCki

FIG. 12

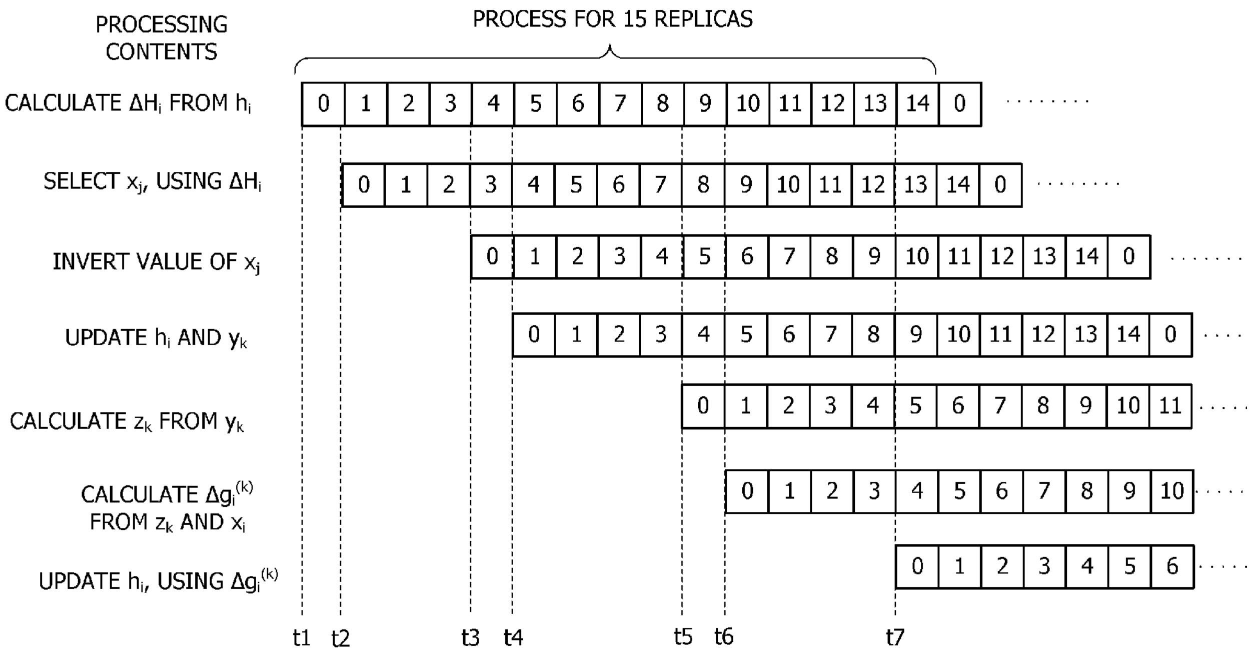
PROCESSING CONTENTS
PROCESS FOR 15 REPLICAS
CALCULATE ΔH$_i$ FROM h$_i$
SELECT x$_j$, USING ΔH$_i$
INVERT VALUE OF x$_j$
UPDATE h$_i$ AND y$_k$
CALCULATE z$_k$ FROM y$_k$
CALCULATE Δg$_i^{(k)}$ FROM z$_k$ AND x$_i$
UPDATE h$_i$, USING Δg$_i^{(k)}$
t1 t2 t3 t4 t5 t6 t7

FIG. 13A

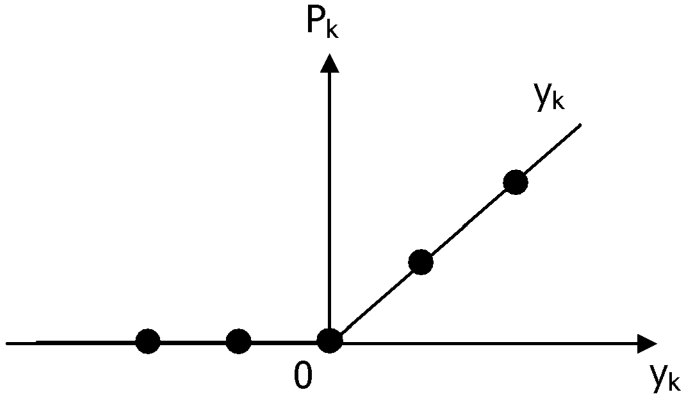


FIG. 13B

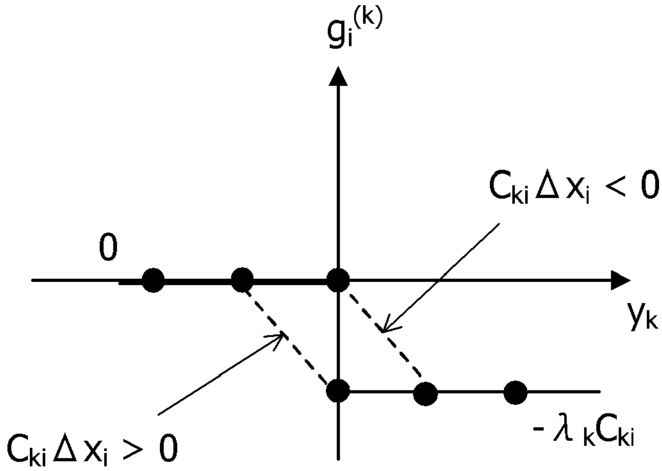

FIG. 14A

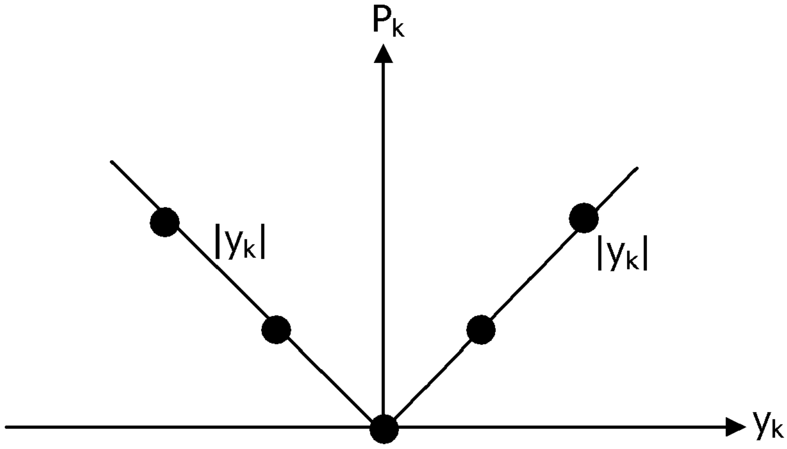


FIG. 14B

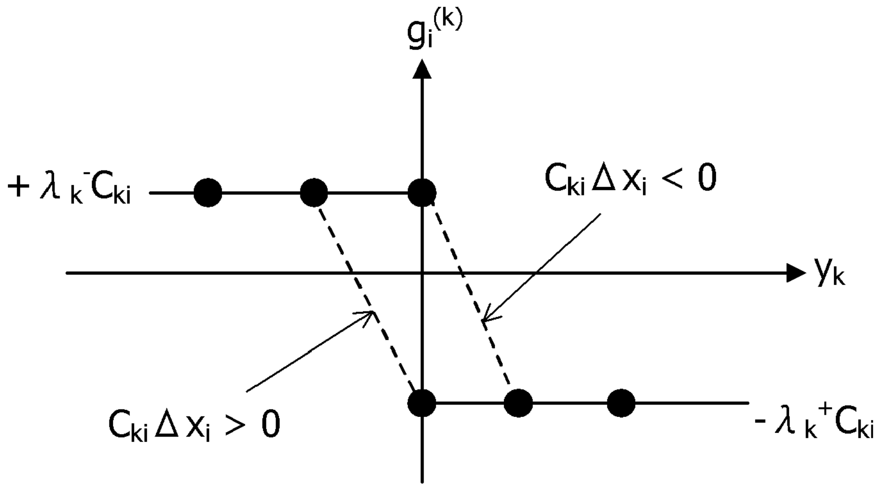

FIG. 15

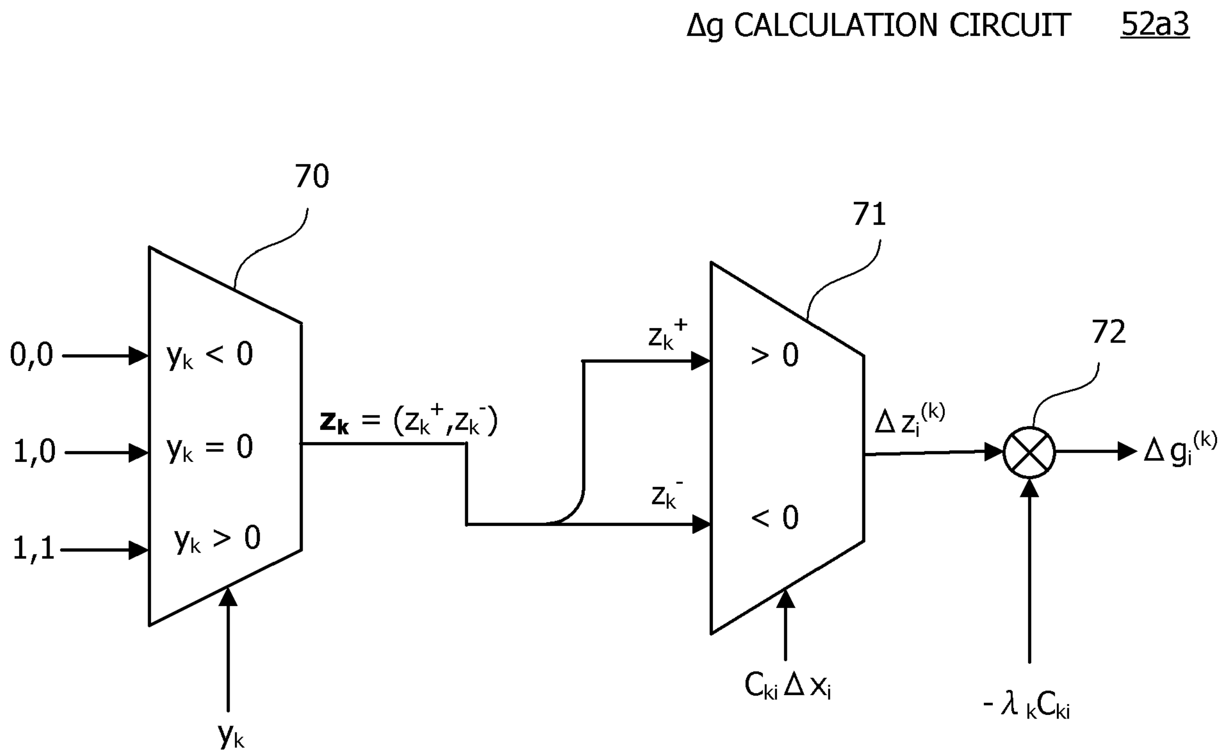
Δg CALCULATION CIRCUIT 52a3
70
0,0
1,0
1,1
$y_k < 0$
$y_k = 0$
$y_k > 0$
$y_k$
$\mathbf{z_k} = (z_k^+, z_k^-)$
71
$z_k^+$
$z_k^-$
> 0
< 0
$C_{ki} \Delta x_i$
$\Delta z_i^{(k)}$
72
$\Delta g_i^{(k)}$
$-\lambda_k C_{ki}$

Europäisches Patentamt
European Patent Office
Office européen des brevets

# EUROPEAN SEARCH REPORT

Application Number
EP 24 17 2608

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/171447 A1 (KANDA KOUICHI [JP]) 2 June 2022 (2022-06-02)<br>* abstract *<br>* paragraph [0001] - paragraph [0011] *<br>* paragraph [0030] - paragraph [0033] *<br>* paragraph [0113] - paragraph [0197] *<br>----- | 1-7 | INV.<br>G06N5/01 |
| A | FURUE YUKI ET AL: "Efficient Correlation-based Discretization of Continuous Variables for Annealing Machines",<br>JOURNAL OF THE PHYSICAL SOCIETY OF JAPAN., vol. 92, no. 4, 15 April 2023 (2023-04-15), XP093214051,<br>JP<br>ISSN: 0031-9015, DOI: 10.7566/JPSJ.92.044802<br>Retrieved from the Internet:<br>URL:https://arxiv.org/pdf/2301.07244><br>* abstract *<br>* sections I, IV *<br>----- | 1-7 | |
| | | | TECHNICAL FIELDS SEARCHED (IPC) |
| | | | G06N |

The present search report has been drawn up for all claims

2

| Place of search | Date of completion of the search | Examiner |
|---|---|---|
| The Hague | 11 October 2024 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 17 2608

This annex lists the patent family members relating to the patent documents cited in the above-mentioned European search report. The members are as contained in the European Patent Office EDP file on
The European Patent Office is in no way liable for these particulars which are merely given for the purpose of information.

11-10-2024

| Patent document cited in search report | Publication date | Patent family member(s) | Publication date |
|---|---|---|---|
| US 2022171447 A1 | 02-06-2022 | CN 114580644 A | 03-06-2022 |
| | | EP 4009242 A1 | 08-06-2022 |
| | | JP 2022087691 A | 13-06-2022 |
| | | US 2022171447 A1 | 02-06-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020204928 A
- US 20080065573
- WO 2020196862 A